# EUROPÄISCHE PATENTSCHRIFT

(11) **EP 3 932 746 B1**
(45) Veröffentlichungstag und Bekanntmachung des Hinweises auf die Patenterteilung: **10.05.2023**
(21) Anmeldenummer: 21179634.7
(22) Anmeldetag: 15.06.2021
(51) Int. Cl.: B60R 11/02

(54) **VERSTAUVORRICHTUNG FÜR EIN WOHNFAHRZEUG UND WOHNFAHRZEUG MIT DER VERSTAUVORRICHTUNG**
STOWAGE DEVICE FOR A CARAVAN AND CARAVAN WITH THE STOWING DEVICE
DISPOSITIF D'ARRIMAGE POUR UNE CARAVANE ET CARAVANE DOTÉE DU DISPOSITIF D'ARRIMAGE

(30) Priorität: 30.06.2020 DE 202020103761 U
(43) Veröffentlichungstag der Anmeldung: 05.01.2022
(73) Patentinhaber: Scolotech GmbH, 88709 Meersburg (DE)
(72) Erfinder:
(74) Vertreter: Daub, Thomas

(56) Entgegenhaltungen:
- WO-A1-2019/141574
- CN-A- 107 117 093
- DE-A1-102009 002 645
- DE-U1-202018 103 915

## Beschreibung

### Stand der Technik

Die Erfindung betrifft eine Verstauvorrichtung nach dem Oberbegriff des Anspruchs 1.

Es ist bereits eine Verstauvorrichtung für ein Wohnfahrzeug, mit wenigstens einem Gehäuse, mit wenigstens einem Auszug, welcher in einer ersten Auszugsstellung zumindest teilweise in dem Gehäuse angeordnet ist und welcher in einer zweiten Auszugsstellung zumindest teilweise außerhalb des Gehäuses angeordnet ist, mit wenigstens einer Abdeckung, welche in einer ersten Abdeckstellung zumindest teilweise den Auszug bedeckt und welche in einer zweiten Abdeckstellung zumindest teilweise den Auszug freigibt, und mit einer Lagereinheit, welche zumindest ein erstes Lager aufweist, welches dazu vorgesehen ist, den Auszug entlang wenigstens einer ersten Richtung von der ersten Auszugsstellung in die zweite Auszugsstellung bewegbar zu lagern, und welche zumindest ein zweites Lager aufweist, welches dazu vorgesehen ist, die Abdeckung abschnittsweise entlang zumindest einer zweiten Richtung von der ersten Abdeckstellung in die zweite Abdeckstellung bewegbar zu lagern, vorgeschlagen worden, wobei die erste Richtung und die zweite Richtung zumindest im Wesentlichen einander entgegengerichtet sind.

DE 20 2018 103915 U1 offenbart eine Verstauvorrichtung für ein Wohnfahrzeug gemäß dem Oberbegriff des Anspruchs 1.

Die Aufgabe der Erfindung besteht insbesondere darin, eine gattungsgemäße Vorrichtung mit verbesserter Flexibilität, insbesondere in Bezug auf eine Raumnutzung, und mit einem verbesserten äußeren Erscheinungsbild bereitzustellen. Die Aufgabe wird erfindungsgemäß durch die Merkmale des Patentanspruchs 1 sowie des Patentanspruchs 11 gelöst, während vorteilhafte Ausgestaltungen und Weiterbildungen der Erfindung den Unteransprüchen entnommen werden können.

### Vorteile der Erfindung

Die Erfindung geht aus von einer Verstauvorrichtung für ein Wohnfahrzeug, mit wenigstens einem Gehäuse, mit wenigstens einem Auszug, welcher in einer ersten Auszugsstellung zumindest teilweise in dem Gehäuse angeordnet ist und welcher in einer zweiten Auszugsstellung zumindest teilweise außerhalb des Gehäuses angeordnet ist, mit wenigstens einer Abdeckung, welche in einer ersten Abdeckstellung zumindest teilweise den Auszug bedeckt und welche in einer zweiten Abdeckstellung zumindest teilweise den Auszug freigibt, und mit einer Lagereinheit, welche zumindest ein erstes Lager aufweist, welches dazu vorgesehen ist, den Auszug entlang wenigstens einer ersten Richtung von der ersten Auszugsstellung in die zweite Auszugsstellung bewegbar zu lagern, und welche zumindest ein zweites Lager aufweist, welches dazu vorgesehen ist, die Abdeckung abschnittsweise entlang zumindest einer zweiten Richtung von der ersten Abdeckstellung in die zweite Abdeckstellung bewegbar zu lagern, wobei die erste Richtung und die zweite Richtung zumindest im Wesentlichen einander entgegengerichtet sind.

Es wird vorgeschlagen, dass das zweite Lager dazu vorgesehen ist, die Abdeckung bei einer Bewegung von der ersten Abdeckstellung in die zweite Abdeckstellung und bei einer Bewegung von der zweiten Abdeckstellung in die erste Abdeckstellung zumindest abschnittsweise zumindest im Wesentlichen quer zur ersten Richtung und/oder zur zweiten Richtung zu bewegen.

Durch die erfindungsgemäße Ausgestaltung der Verstauvorrichtung kann eine vorteilhaft hohe Flexibilität, insbesondere hinsichtlich einer Bewegungsstrecke der Abdeckung, erreicht werden. Es kann ein vorteilhaft großer umbauter Raum ermöglicht werden. Es kann eine vorteilhaft kompakte Anordnung der Verstauvorrichtung, insbesondere der Abdeckung, in der zweiten Abdeckstellung ermöglicht werden. Es kann eine besonders kompakte Anordnung der Verstauvorrichtung in einem Wohnfahrzeug erzielt werden. Es kann ein Benutzerkomfort verbessert werden. Es kann eine vorteilhaft bündige Anordnung der Abdeckung mit einer Außenwand des Gehäuses ermöglicht werden. Dadurch kann vorzugsweise eine vorteilhaft hohe Flexibilität hinsichtlich einer Nutzung der Abdeckung in Kombination mit der Außenwand erreicht werden. Beispielsweise kann die Abdeckung zusammen mit der Außenwand in der ersten Abdeckstellung zu einem Tragen von Bildern, Dartboards, Notizen o. dgl. verwendet werden, insbesondere da die Abdeckung und die Außenwand zusammen zumindest im Wesentlichen mit einer gemeinsamen ebenen Außenfläche angeordnet werden können.

Unter einer "Verstauvorrichtung" für ein Wohnfahrzeug soll insbesondere eine Vorrichtung verstanden werden, welche zu einem Verstauen von Objekten in einem Wohnfahrzeug vorgesehen ist. Die Verstauvorrichtung ist insbesondere ein funktionstüchtiger Bestandteil, insbesondere eine Konstruktions- und/oder Funktionskomponente, eines Wohnfahrzeugs. Unter einem "Wohnfahrzeug" soll insbesondere ein Wohnmobil, ein Wohnwagen und/oder ein Kastenwagen verstanden werden. Die Verstauvorrichtung kann einen Innenausbau des Wohnfahrzeugs zumindest teilweise, vorzugsweise zumindest zu einem Großteil und besonders bevorzugt vollständig ausbilden. Unter "vorgesehen" soll insbesondere speziell programmiert, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einem "Gehäuse" soll insbesondere ein Objekt verstanden werden, welches einen Innenraum in sich einschließt. Vorzugsweise begrenzt das Gehäuse den Innenraum von zumindest einer ersten Seite, einer zweiten Seite und einer dritten Seite, wobei sich vorzugsweise die erste Seite und die dritte Seite gegenüberliegen und die zweite Seite quer zur ersten Seite und quer zur dritten Seite orientiert ist oder alle der drei Seiten zueinander quer orientiert sind. Weiter bevorzugt begrenzt das Gehäuse den Innenraum von zumindest einer vierten Seite, welche vorzugsweise zumindest im Wesentlichen quer zur ersten Seite, zweiten Seite und dritten Seite orientiert ist. Vorzugsweise sind die erste und die dritte Seite zumindest im Wesentlichen parallel zueinander. Weiter bevorzugt ist die zweite Seite zumindest im Wesentlichen senkrecht zur ersten Seite und zur dritten Seite. Besonders bevorzugt ist die vierte Seite zumindest im Wesentlichen quer, zumindest im Wesentlichen schräg oder zumindest im Wesentlichen senkrecht zur ersten Seite, zur zweiten Seite und zur dritten Seite angeordnet. Bevorzugt begrenzt die Abdeckung den Innenraum, insbesondere in der ersten Abdeckstellung, von der ersten Seite zumindest teilweise. Unter einer "Seite" soll insbesondere ein aus einer Blickrichtung sichtbarer Teil einer Oberfläche eines Objekts, und zwar insbesondere zumindest eine von mehreren ebenen Flächen, die das Objekt begrenzen, verstanden werden. Unter "im Wesentlichen quer" soll insbesondere eine Ausrichtung eines Objekts, insbesondere einer Seitenfläche, einer Haupterstreckungsachse oder einer Haupterstreckungsebene des Objekts, oder einer Richtung, insbesondere einer Richtung der abschnittsweisen Bewegung der Abdeckung, relativ zu einem anderen Objekt, insbesondere einer Seitenfläche, einer Haupterstreckungsachse oder einer Haupterstreckungsebene des anderen Objekts, oder einer Bezugsrichtung, insbesondere der ersten Richtung und/oder der zweiten Richtung, verstanden werden, wobei die Ausrichtung des Objekt oder der Richtung relativ zu dem anderen Objekt oder der Bezugsrichtung verschieden von einer parallelen Ausrichtung ist. Bevorzugt beträgt ein Winkel zwischen dem/der zumindest im Wesentlichen quer zu dem anderen Objekt oder zu der Bezugsrichtung ausgerichteten Objekt oder Richtung einem Wert aus einem Wertebereich zwischen 3° und 177°, vorzugsweise zwischen 5° und 175° und bevorzugt zwischen 8° und 172°. Bevorzugt ist das zweite Lager dazu vorgesehen, die Abdeckung bei einer Bewegung von der ersten Abdeckstellung in die zweite Abdeckstellung und bei einer Bewegung von der zweiten Abdeckstellung in die erste Abdeckstellung zumindest abschnittsweise in und/oder entgegen eine zumindest im Wesentlichen quer zur ersten Richtung und/oder zur zweiten Richtung ausgerichtete Versatzrichtung beweglich zu lagern. Vorzugsweise ist das zweite Lager dazu vorgesehen, die Abdeckung von der ersten Abdeckstellung in die zweite Abdeckstellung und/oder von der zweiten Abdeckstellung in die erste Abdeckstellung lediglich translatorisch, insbesondere ohne eine Rotation, zu bewegen. Bevorzugt ist die Haupterstreckungsebene der Abdeckung in der ersten Abdeckstellung und in der zweiten Abdeckstellung gleich, insbesondere zumindest im Wesentlichen parallel, zu einer Referenzebene, insbesondere einer Haupterstreckungsebene des Gehäuses und/oder des Auszugs, ausgerichtet. Vorzugsweise ist die Haupterstreckungsebene der Abdeckung in jeder Position der Abdeckung bei einer Bewegung von der ersten Abdeckstellung in die zweite Abdeckstellung und/oder von der zweiten Abdeckstellung in die erste Abdeckstellung über das zweite Lager gleich ausgerichtet. Insbesondere entspricht ein Winkel zwischen der Versatzrichtung und der ersten Richtung und/oder der zweiten Richtung einem Wert aus einem Wertebereich zwischen 3° und 177°, vorzugsweise zwischen 5° und 175° und bevorzugt zwischen 8° und 172°. Unter einer "Haupterstreckungsachse" eines Objekts soll insbesondere eine Achse verstanden werden, welche parallel zu einer längsten Kante eines kleinsten geometrischen Quaders verläuft, welcher das Objekt gerade noch vollständig umschließt. Unter einer "Haupterstreckungsebene" eines Bauteils soll insbesondere eine Ebene verstanden werden, welche parallel zu einer größten Seitenfläche eines kleinsten gedachten Quaders ist, welcher das Bauteil gerade noch vollständig umschließt, und insbesondere durch den Mittelpunkt des Quaders verläuft. Unter "im Wesentlichen parallel" soll insbesondere eine Ausrichtung einer Geraden, einer Ebene oder einer Richtung, beispielsweise der ersten Seite, relativ zu einer anderen Geraden, einer anderen Ebene oder einer Bezugsrichtung, beispielsweise der dritten Seite, verstanden werden, wobei die Gerade, die Ebene oder die Richtung und andere Gerade, die andere Ebene oder die Bezugsrichtung, insbesondere in einer Projektionsebene betrachtet, einen Winkel von 0° insbesondere unter Berücksichtigung einer maximalen Abweichung von kleiner als 8°, vorteilhaft von kleiner als 5° und besonders vorteilhaft von kleiner als 2°, einschließen. Unter "im Wesentlichen senkrecht" soll insbesondere eine Ausrichtung einer Geraden, einer Ebene oder einer Richtung, beispielsweise der dritten Seite, relativ zu einer anderen Geraden, einer anderen Ebene oder einer Bezugsrichtung, insbesondere der ersten Seite und/oder der dritten Seite, verstanden werden, wobei die Gerade, die Ebene oder die Richtung und die andere Gerade, die andere Ebene oder die Bezugsrichtung, insbesondere in einer Projektionsebene betrachtet, einen Winkel von 90° insbesondere unter Berücksichtigung einer maximalen Abweichung von kleiner als 8°, vorteilhaft von kleiner als 5° und besonders vorteilhaft von kleiner als 2°, einschließen.

Unter einem "Auszug" soll insbesondere ein ausziehbarer Teil eines Objekts verstanden werden, welcher insbesondere einen Aufnahmeraum zur Lagerung von Gegenständen umfasst. Der Auszug weist zumindest eine laterale Öffnung zum Befüllen und/oder Herausnehmen von Gegenständen aus dem Aufnahmeraum auf.

Unter einer "Abdeckung" soll insbesondere ein Objekt verstanden werden, welches dazu vorgesehen ist, vorzugsweise abhängig von einem Betriebszustand und/oder einer Abdeckstellung, ein weiteres Objekt, und zwar insbesondere den Auszug, den Aufnahmeraum und/oder einen vom Gehäuse zumindest teilweise umschlossenen Raum, abzudecken. Die Abdeckung bedeckt insbesondere in einer ersten Abdeckstellung zumindest teilweise die Öffnung des Auszugs, eine, insbesondere zumindest im Wesentlichen parallel zur ersten Seite und/oder zur dritten Seite angeordnete Öffnung des Gehäuses, den Aufnahmeraum und/oder den vom Gehäuse zumindest teilweise umschlossenen Raum und gibt diese/diesen in einer zweiten Abdeckstellung zumindest teilweise frei.

Vorzugsweise ist die Abdeckung aus zumindest einem, insbesondere genau einem, zumindest im Wesentlichen plattenförmigen Abdeckungselement gebildet. Vorzugsweise ist die Abdeckung, insbesondere das Abdeckungselement, als eine Deckplatte ausgebildet. Unter "im Wesentlichen plattenförmig" soll insbesondere ein Bauteil, insbesondere das Abdeckungselement, verstanden werden, welches, in einer Abwicklung in einer Ebene betrachtet, in einem Querschnitt senkrecht zur Ebene eine unrunde Querschnittsfläche aufweist und senkrecht zur Ebene eine insbesondere zumindest im Wesentlichen gleichbleibende Materialstärke aufweist, die weniger als 50%, vorzugsweise weniger als 25% und besonders bevorzugt weniger als 10% einer Flächenerstreckung des räumlichen Elements parallel zur Ebene, insbesondere einer kleinsten Flächenerstreckung des Elements parallel zur Ebene, beträgt. Insbesondere in einer Richtung senkrecht zu einer Haupterstreckungsebene der Abdeckung, des Auszugs und/oder des Gehäuses betrachtet, bedeckt die Abdeckung in der ersten Abdeckstellung zumindest teilweise, vorzugsweise zumindest zu einem Großteil und besonders bevorzugt vollständig, den Auszug, insbesondere die Öffnung des Auszugs, und/oder ein am Auszug angeordnetes Element oder Gerät und gibt in der zweiten Abdeckstellung zumindest teilweise, vorzugsweise zumindest zu einem Großteil und besonders bevorzugt vollständig, den Auszug frei. Unter dem Ausdruck "zumindest zu einem Großteil" soll dabei insbesondere zumindest zu 55 %, vorteilhaft zumindest zu 65 %, vorzugsweise zumindest zu 75 %, besonders bevorzugt zumindest zu 85 % und besonders vorteilhaft zumindest zu 95 % und insbesondere aber auch vollständig verstanden werden.

Unter einer "Lagereinheit" soll insbesondere eine Einheit verstanden werden, welche zumindest ein Lager zur beweglichen Lagerung von einem Objekt relativ zu zumindest einem weiteren Objekt umfasst, verstanden werden. Insbesondere ist das Lager dazu vorgesehen, zumindest einen Freiheitsgrad der Bewegung der Objekte zueinander zu beschränken und vorzugsweise zumindest einen Freiheitsgrad der Bewegung der Objekte zueinander zuzulassen. Beispielsweise ist das Lager als ein Gleitlager, als ein Wälzlager, als ein Kugellager o. dgl. ausgebildet. Es ist denkbar, dass das erste Lager und das zweite Lager zumindest teilweise einteilig miteinander ausgebildet sind. Darunter, dass ein erstes Objekt, insbesondere das erste Lager, und ein zweites Objekt, insbesondere das zweite Lager, "zumindest teilweise einteilig" ausgebildet sind, soll insbesondere verstanden werden, dass zumindest ein Element und/oder Teil des ersten Objekts und zumindest ein Element und/oder Teil des zweiten Objekts einstückig ausgebildet sind/ist und/oder dass das erste Objekt und das zweite Objekt zumindest ein gemeinsames Element aufweisen, welches als Teil des ersten Objekts und als Teil des zweiten Objekts ausgebildet ist. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Vorteilhaft soll unter einstückig auch einteilig verstanden werden. In einem Einbauzustand der Verstauvorrichtung in einem Wohnfahrzeug umfasst eine Horizontalebene, welche insbesondere eine Vorwärtsfahrtrichtung des Wohnfahrzeugs umfasst, vorzugsweise die erste Richtung und die zweite Richtung. Es ist aber auch denkbar, dass die erste Richtung und die zweite Richtung, insbesondere in einem Einbauzustand der Verstauvorrichtung in einem Wohnfahrzeug, zumindest im Wesentlichen senkrecht zur Vorwärtsfahrtrichtung und/oder zu einer Horizontalebene angeordnet sind.

Vorzugsweise ist die Lagereinheit, insbesondere das zweite Lager, dazu vorgesehen, die Abdeckung entlang einer Bewegungsstrecke beweglich zu lagern. Bevorzugt gibt die Bewegungsstrecke die Bewegung der Abdeckung von der ersten Abdeckstellung in die zweite Abdeckstellung und von der zweiten Abdeckstellung in die erste Abdeckstellung vor. Insbesondere ist die Abdeckung dazu vorgesehen, bei einer Bewegung von der ersten Abdeckstellung in die zweite Abdeckstellung und bei einer Bewegung von der zweiten Abdeckstellung in die erste Abdeckstellung über das zweite Lager entlang der Bewegungsstrecke bewegt zu werden. Vorzugsweise ist das zweite Lager derart ausgebildet, dass die Bewegungsstrecke zumindest teilweise, insbesondere zumindest größtenteils, zumindest im Wesentlichen parallel zur ersten Richtung und/oder zur zweiten Richtung verläuft. Bevorzugt ist das zweite Lager derart ausgebildet, dass die Bewegungsstrecke zumindest abschnittsweise zumindest im Wesentlichen quer zur ersten Richtung und/oder zur zweiten Richtung verläuft. Vorzugsweise ist das zweite Lager dazu vorgesehen, die Abdeckung bei der Bewegung entlang der Bewegungsstrecke zu führen.

Vorzugsweise sind/ist das erste Lager und/oder das zweite Lager der Lagereinheit als ein Translativlager ausgebildet, welches zu einer translativen Lagerung vorgesehen ist. Unter einer "translativen Lagerung" soll insbesondere eine Lagerung verstanden werden, welche dazu vorgesehen ist, translative, insbesondere höchstens translative, Freiheitsgrade der Bewegung zu erlauben. Vorzugsweise ist der Auszug über das erste Lager zu einer Bewegung, insbesondere relativ zu dem Gehäuse und/oder der Abdeckung, in die erste Richtung und/oder die zweite Richtung beweglich gelagert. Insbesondere ist das erste Lager der Lagereinheit als ein Linearlager ausgebildet, welches zu einer linearen Lagerung vorgesehen ist. Bevorzugt sind die erste Richtung und die zweite Richtung zueinander antiparallel. Unter "antiparellel" soll insbesondere entgegengerichtet parallel verstanden werden. Vorzugsweise ist die Lagereinheit, insbesondere das erste Lager und das zweite Lager, zu einer reversiblen Überführung des Auszugs und der Abdeckung vorgesehen. Bevorzugt ist die Abdeckung in der ersten Abdeckstellung teilweise außerhalb des Gehäuses, insbesondere an einer Außenwand des Gehäuses, angeordnet und/oder in der zweiten Abdeckstellung zumindest teilweise, vorzugsweise zumindest zu einem Großteil und besonders bevorzugt vollständig, innerhalb des Gehäuses, insbesondere dem vom Gehäuse umschlossenen Raum, angeordnet.

Die Verstauvorrichtung umfasst vorzugsweise zumindest eine Koppeleinheit, welche den Auszug und die Abdeckung bewegungstechnisch, insbesondere bei einer Bewegung von der ersten Abdeckstellung und der ersten Auszugsstellung in die zweite Abdeckstellung und die zweite Auszugsstellung und bei einer Bewegung von der zweiten Abdeckstellung und der zweiten Auszugsstellung in die erste Abdeckstellung und die erste Auszugsstellung, miteinander koppelt.

Darunter, dass "zwei Bauteile bewegungstechnisch miteinander gekoppelt" sind, soll insbesondere verstanden werden, dass eine Bewegung des einen Bauteils, insbesondere des Auszugs, eine Bewegung des weiteren Bauteiles, insbesondere der Abdeckung, bedingt und umgekehrt. Bevorzugt umfasst die Koppeleinheit zumindest ein Koppelelement, welches eine Bewegung des Auszugs in die erste Richtung in eine Bewegung der Abdeckung in die zweite Richtung umwandelt oder umkehrt. Das Koppelelement ist bevorzugt dazu vorgesehen, den Auszug zumindest mittelbar mit der Abdeckung zu verbinden. Unter "zumindest mittelbar" soll dabei insbesondere indirekt, über weitere Bauteile, Zwischenglieder oder dergleichen verbunden verstanden werden. Insbesondere soll "unter zumindest mittelbar verbunden" auch unmittelbar verbunden, also insbesondere direkt, ohne weitere Bauteile, Zwischenglieder oder dergleichen verbunden, verstanden werden. Das Koppelelement ist vorzugsweise dazu vorgesehen, die Abdeckung bei einer Bewegung des Auszugs von der ersten Auszugsstellung in die zweite Auszugsstellung, insbesondere automatisch oder selbstständig, von der ersten Abdeckstellung in die zweite Abdeckstellung zu bewegen. Das Koppelelement ist bevorzugt dazu vorgesehen, die Abdeckung bei einer Bewegung des Auszugs von der zweiten Auszugsstellung in die erste Auszugsstellung, insbesondere automatisch oder selbstständig, von der zweiten Abdeckstellung in die erste Abdeckstellung zu bewegen. Vorzugsweise ist die Abdeckung in der ersten Abdeckstellung angeordnet, falls der Auszug in der ersten Auszugsstellung angeordnet ist. Bevorzugt ist die Abdeckung in der zweiten Abdeckstellung angeordnet, falls der Auszug in der zweiten Auszugsstellung angeordnet ist. Insbesondere ist das Koppelelement derart ausgebildet, dass eine Bewegung des Auszugs von der ersten Auszugsstellung in die zweite Auszugsstellung zumindest im Wesentlichen synchron zu einer Bewegung der Abdeckung von der ersten Abdeckstellung in die zweite Abdeckstellung erfolgt. Vorzugsweise ist das Koppelelement derart ausgebildet, dass eine Bewegung des Auszugs von der zweiten Auszugsstellung in die erste Auszugsstellung zumindest im Wesentlichen synchron zu einer Bewegung der Abdeckung von der zweiten Abdeckstellung in die erste Abdeckstellung erfolgt. Das Koppelement ist bevorzugt als ein biegeschlaffes Bauteil ausgebildet. Unter einem "biegeschlaffen Bauteil", wie vorzugsweise einem biegeschlaffen Koppelelement, soll insbesondere ein Bauteil, vorzugsweise ein längliches Bauteil, verstanden werden, welches zumindest in einer Richtung senkrecht zu einer Haupterstreckungsrichtung biegeschlaffe Eigenschaften aufweist. Vorzugsweise ist das biegeschlaffe Bauteil ein forminstabiles Bauteil. Besonders bevorzugt bringt das biegeschlaffe Bauteil in einem ausgestreckten Zustand einer parallel zu einer Haupterstreckungsachse des Bauteils wirkenden Druckkraft eine Gegenkraft auf, die geringer ist als eine Gewichtskraft des Bauteils. Vorzugsweise beträgt die Gegenkraft maximal 70%, vorzugsweise maximal 50% und besonders bevorzugt maximal 30% einer Gewichtskraft. Dabei soll unter einem "länglichen Bauteil" insbesondere ein Bauteil verstanden werden, das eine Quererstreckung aufweist, die um ein Vielfaches geringer ist als eine Längserstreckung. Dabei soll unter "um ein Vielfaches geringer" insbesondere zumindest 3-mal, vorzugsweise zumindest 5-mal und besonders bevorzugt zumindest 10-mal geringer verstanden werden. Vorzugsweise ist das biegeschlaffe Koppelelement zumindest über eine wesentliche Erstreckung befestigungsfrei. Bevorzugt ist das biegeschlaffe Koppelelement zumindest über eine wesentliche Erstreckung ohne eine direkte Befestigung und/oder Verbindung mit weiteren Komponenten, insbesondere des Gehäuses, der Abdeckung und/oder des Auszugs. Besonders bevorzugt ist das biegeschlaffe Koppelelement zumindest über eine wesentliche Erstreckung frei hängend. Es sind verschiedene, einem Fachmann als sinnvoll erscheinende biegeschlaffe Koppelelemente denkbar, insbesondere ist das biegeschlaffe Bauteil jedoch zumindest teilweise oder vollständig von einer Kette, einem Seil, einer Schnur, einem Riemen und/oder einem Band gebildet. Vorzugsweise weist das biegeschlaffe Getriebeelement zumindest ein Profil auf, welches zu einer formschlüssigen Kraftübertragung vorgesehen ist. Insbesondere weist das biegeschlaffe Getriebeelement mehrere Profilelemente hintereinander auf, welche das Profil ausbilden. Vorzugsweise weist das Koppelelement zumindest ein Trägerelement auf, an welchem die Profilelemente angeordnet sind. Besonders bevorzugt ist das Trägerelement als eine Schnur und/oder ein Seil ausgebildet.

Die Profilelemente sind insbesondere als Kugeln ausgebildet, welche insbesondere an dem Trägerelement aufgereiht sind. Das biegeschlaffe Koppelelement ist insbesondere als eine Kugelkette, und zwar insbesondere als eine Endloskugelkette, ausgebildet.

Vorzugsweise sind/ist die erste Richtung und/oder die zweite Richtung zumindest im Wesentlichen parallel zu einer Haupterstreckungsebene des Auszugs, der Abdeckung und/oder des Gehäuses orientiert. Der Auszug und/oder das Gehäuse weisen/weist bevorzugt zumindest im Wesentlichen senkrecht zu einer Haupterstreckungsebene des Auszugs und/oder des Gehäuses eine Öffnung, insbesondere die zuvor genannte laterale Öffnung, auf. Die Abdeckung, insbesondere eine Haupterstreckungsebene der Abdeckung und/oder des Abdeckungselements, ist vorzugsweise zumindest im Wesentlichen parallel zur Haupterstreckungsebene des Auszugs und/oder des Gehäuses angeordnet. Insbesondere ist der Auszug um eine Strecke, welche höchstens 60 %, vorzugsweise höchsten 55 % und besonders bevorzugt höchstens 50 % der Haupterstreckung des Auszugs entspricht, aus dem Gehäuse ausziehbar.

Des Weiteren wird vorgeschlagen, dass das zweite Lager zumindest ein Führungselement zu einer Führung der Abdeckung umfasst, welches in zumindest einem Teilabschnitt zumindest im Wesentlichen quer zur ersten Richtung und/oder zur zweiten Richtung ausgebildet ist. Es kann eine vorteilhaft sichere und schnelle Bewegung der Abdeckung von der ersten Abdeckstellung in die zweite Abdeckstellung und von der zweiten Abdeckstellung in die erste Abdeckstellung erreicht werden. Es kann ein ungewolltes Verkanten der Abdeckung bei einer Bewegung von der ersten Abdeckstellung in die zweite Abdeckstellung und bei einer Bewegung von der zweiten Abdeckstellung in die erste Abdeckstellung vorteilhaft verhindert werden. Bevorzugt ist das Führungselement als eine Nut, als eine Ausnehmung, als eine Führungsschiene o. dgl. ausgebildet. Vorzugsweise gibt das Führungselement die Bewegungsstrecke der Abdeckung vor. Besonders bevorzugt ist die Abdeckung durch das Führungselement auf eine Bewegung entlang und/oder innerhalb der Bewegungsstrecke begrenzt. Insbesondere ist das Führungselement an einer Innenwand des Gehäuses angeordnet, insbesondere befestigt, welche vorzugsweise relativ zur Abdeckung und/oder dem Auszug unbeweglich angeordnet ist. Bevorzugt umfasst das zweite Lager zumindest ein weiteres Führungselement, welches zu einer Kopplung mit dem Führungselement vorgesehen ist. Insbesondere ist das weitere Führungselement korrespondierend zu einer Ausgestaltung des Führungselements ausgebildet, beispielsweise als eine Rolle, als ein Stift, als ein Pin, als ein Fortsatz o. dgl. Besonders bevorzugt ist das weitere Führungselement über das Führungselement entlang der Bewegungsstrecke beweglich gelagert. Bevorzugt ist das weitere Führungselement an der Abdeckung, insbesondere dem Abdeckungselement, angeordnet, insbesondere befestigt. Bevorzugt weist das zweite Lager eine Mehrzahl von Führungselementen und/oder weiteren Führungselementen auf. In einer bevorzugten Ausgestaltung der Lagereinheit umfasst das zweite Lager zwei Führungselemente, welche entlang der ersten Richtung oder der zweiten Richtung betrachtet hintereinander angeordnet sind, und zwei weitere Führungselemente, welche entlang der ersten Richtung oder der zweiten Richtung betrachtet hintereinander angeordnet sind. Insbesondere sind die zwei Führungselemente und/oder die zwei weiteren Führungselemente jeweils zumindest im Wesentlichen identisch ausgebildet und in einem gleichen Abstand in die erste Richtung oder die zweite Richtung versetzt angeordnet.

Zudem wird vorgeschlagen, dass das zweite Lager dazu vorgesehen ist, die Abdeckung bei einer Bewegung von der ersten Abdeckstellung in die zweite Abdeckstellung zumindest teilweise, insbesondere zumindest größtenteils, in Richtung des Auszugs zu bewegen. Es kann eine vorteilhaft kompakte Ausgestaltung der Verstauvorrichtung ermöglicht werden, insbesondere da die Abdeckung bei einem Übergang in die zweite Abdeckstellung innerhalb des Gehäuses angeordnet werden kann. Vorzugsweise ist das zweite Lager dazu vorgesehen, die Abdeckung bei einer Bewegung von der ersten Abdeckstellung in die zweite Abdeckstellung in Richtung der Haupterstreckungsebene der Verstauvorrichtung, insbesondere des Gehäuses und/oder des Auszugs, und/oder in eine von der ersten Seite zur dritten Seite hin ausgerichtete Richtung zu bewegen. Das zweite Lager ist vorzugsweise dazu vorgesehen, die Abdeckung bei einer Bewegung von der zweiten Abdeckstellung in die erste Abdeckstellung zumindest teilweise von dem Auszug weg zu bewegen.

Ferner wird vorgeschlagen, dass das Führungselement in Teilabschnitten einer, insbesondere der vorher genannten, Bewegungsstrecke der Abdeckung von der ersten Abdeckstellung in die zweite Abdeckstellung jeweils zumindest im Wesentlichen geradlinig ausgebildet ist, wobei die Teilabschnitte zusammen die zumindest im Wesentlichen vollständige Bewegungsstrecke bilden. Es kann eine vorteilhaft einfache und gleichmäßige Führung der Abdeckung ermöglicht werden, insbesondere da die Abdeckung lediglich über eine kurze Strecke zumindest im Wesentlichen quer zur ersten Richtung und/oder zur zweiten Richtung bewegt werden kann. Es kann eine vorteilhaft einfache und schnelle Bewegung der Abdeckung zu einem Öffnen der Verstauvorrichtung erreicht werden. Unter "im Wesentlichen geradlinig" soll insbesondere eine Strecke oder eine Form, insbesondere eine Form der einzelnen Teilabschnitte der Bewegungsstrecke, verstanden werden, wobei Tangenten an die Strecke oder an die Form, insbesondere eine Außenseite der Form, entlang einer Haupterstreckungsachse der Strecke oder der Form mit der Haupterstreckungsachse der Strecke oder der Form einen Winkel von höchstens 8°, vorzugsweise höchstens 5° und bevorzugt höchstens 3°, aufspannt. Vorzugsweise ist das Führungselement in zumindest einem, insbesondere genau einem, Teilabschnitt der Teilabschnitte der Bewegungsstrecke zumindest im Wesentlichen geradlinig ausgebildet und zumindest im Wesentlichen quer zur ersten Richtung und/oder zur zweiten Richtung ausgerichtet. Insbesondere ist der Teilabschnitt zumindest im Wesentlichen quer zur ersten Richtung und/oder zur zweiten Richtung ausgerichtet. Unter einem "Teilabschnitt" einer Strecke, insbesondere der Bewegungsstrecke, soll insbesondere ein zusammenhängender Teilbereich der Strecke verstanden werden. Bevorzugt ist das Führungselement mit Ausnahme des Teilabschnitts in allen Teilabschnitten der Bewegungsstrecke zumindest im Wesentlichen parallel zur ersten Richtung und/oder zur zweiten Richtung ausgerichtet. Insbesondere ist die Bewegungsstrecke zumindest im Wesentlichen frei von Rundungen ausgebildet.

Des Weiteren wird vorgeschlagen, dass das Gehäuse zumindest ein Außenwandelement umfasst, wobei eine Außenfläche der Abdeckung in der ersten Abdeckstellung zumindest im Wesentlichen bündig zu einer Außenfläche des Außenwandelements angeordnet ist und in der zweiten Abdeckstellung entlang der zweiten Richtung betrachtet neben dem Außenwandelement angeordnet ist. Es kann ein vorteilhaft ansprechendes äußeres Erscheinungsbild der Verstauvorrichtung ermöglicht werden, insbesondere da ein Versatz zwischen anderen Außenwänden der Verstauvorrichtung und dem Außenwandelement vorteilhaft verhindert werden kann. Die Verstauvorrichtung kann vorteilhaft unauffällig in ein Wandsegment des Wohnfahrzeugs integriert werden. Vorzugsweise begrenzt das Außenwandelement den Innenraum von der ersten Seite zumindest teilweise. Bevorzugt ist das Außenwandelement an einer gleichen Seite der Verstauvorrichtung angeordnet wie die Abdeckung. Unter "im Wesentlichen bündig" sollen insbesondere zwei Flächen, insbesondere die Außenfläche der Abdeckung und die Außenfläche des Außenwandelements, verstanden werden, welche jeweils in einem Nahbereich von aneinander zugewandten Seiten oder Kanten parallel zu einer Referenzebene ausgerichtet sind und zu dieser Referenzebene an den aneinander zugewandten Seiten oder Kanten jeweils einen maximalen Abstand von höchstens 1 mm, vorzugsweise höchstens 0,5 mm und bevorzugt höchstens 0,2 mm, aufweisen. Insbesondere umfasst die Referenzebene die beiden zumindest im Wesentlichen bündigen Flächen zumindest teilweise, vorzugsweise zumindest größtenteils. Vorzugsweise sind/ist die Außenfläche der Abdeckung und/oder die Außenfläche des Außenwandelements, insbesondere in einem Nahbereich von aneinander zugewandten Seiten oder Kanten der beiden Außenflächen, zumindest größtenteils, insbesondere zumindest im Wesentlichen vollständig, ebenflächig ausgebildet. Es ist auch denkbar, dass die Außenfläche des Außenwandelements lediglich in einem der Abdeckung zugewandten Teilbereich des Außenwandelements ebenflächig ausgebildet ist. Bevorzugt ist die Außenfläche des Außenwandelements zumindest innerhalb eines Abstands zu einer, insbesondere in der ersten Abdeckstellung, der Abdeckung zugewandten Kante des Außenwandelements von mindestens 0,2 cm, vorzugsweise mindestens 0,5 mm und bevorzugt mindestens 1 cm, ebenflächig ausgebildet.

Zudem wird vorgeschlagen, dass das zweite Lager derart ausgebildet ist, dass die Abdeckung bei einer Bewegung entlang einer, insbesondere der vorher genannten, Bewegungsstrecke von der ersten Abdeckstellung in die zweite Abdeckstellung innerhalb eines ersten Teilabschnitts der Bewegungsstrecke der Abdeckung um eine Einzugstiefe von mindestens 1 cm, vorzugsweise mindestens 2 cm und bevorzugt mindestens 3 cm, zumindest im Wesentlichen senkrecht zur ersten Richtung und/oder zur zweiten Richtung bewegt wird. Es kann ein vorteilhaft einfaches Verstauen der Abdeckung innerhalb des Gehäuses erreicht werden. Es kann eine vorteilhaft kompakte Ausgestaltung der Verstauvorrichtung in der zweiten Abdeckstellung ermöglicht werden, insbesondere da die Abdeckung an dem Außenwandelement vorbei bewegt und/oder neben dem Außenwandelement angeordnet werden kann. Vorzugsweise ist die Einzugstiefe zumindest im Wesentlichen senkrecht zur ersten Richtung und zur zweiten Richtung ausgerichtet. Bevorzugt ist die Einzugstiefe als eine maximale Verschiebung der Abdeckung bei der Bewegung von der ersten Abdeckstellung in die zweite Abdeckstellung und bei der Bewegung von der zweiten Abdeckstellung in die erste Abdeckstellung in eine zumindest im Wesentlichen senkrecht zur ersten Richtung und zur zweiten Richtung ausgerichtete Einzugsrichtung ausgebildet. Bevorzugt ist das zweite Lager dazu vorgesehen, die Abdeckung bei einer Bewegung von der ersten Abdeckstellung in die zweite Abdeckstellung zumindest teilweise in die Einzugsrichtung zu bewegen. Besonders bevorzugt setzt sich die Bewegung der Abdeckung zumindest im Wesentlichen quer zur ersten Richtung und/oder zur zweiten Richtung vektoriell aus einer Bewegung in die Einzugsrichtung und einer Bewegung in die zweite Richtung zusammen.

Insbesondere ist die Einzugstiefe, insbesondere entlang der ersten Richtung oder der zweiten Richtung betrachtet, als eine Differenz eines minimalen Abstands der Abdeckung und des Auszugs in der ersten Abdeckstellung und eines minimalen Abstands der Abdeckung und des Auszugs in der zweiten Abdeckstellung ausgebildet. Insbesondere ist die Einzugstiefe als eine Distanz ausgebildet, über die sich die Abdeckung bei der Bewegung von der ersten Abdeckstellung in die zweite Abdeckstellung in Richtung des Auszugs und/oder in Richtung der Haupterstreckungsebene der Verstauvorrichtung, insbesondere des Gehäuses und/oder des Auszugs, bewegt. Vorzugsweise entspricht eine mittlere Dicke der Abdeckung, insbesondere des Abdeckungselements, und/oder des Außenwandelements einem Wert aus einem Wertebereich von 0,5 cm bis 3 cm, vorzugsweise von 1 cm bis 2,5 cm und bevorzugt von 1,5 cm bis 2 cm. Besonders bevorzugt ist die mittlere Dicke der Abdeckung, insbesondere des Abdeckungselements, und/oder des Außenwandelements kleiner als die Einzugstiefe. Bevorzugt ist das zweite Lager derart ausgebildet, dass der erste Teilabschnitt der Bewegungsstrecke bei einer Bewegung von der ersten Abdeckstellung in die zweite Abdeckstellung an einem Anfang der Bewegungsstrecke angeordnet ist und insbesondere zuerst durchlaufen wird.

Ferner wird vorgeschlagen, dass das zweite Lager derart ausgebildet ist, dass die Abdeckung bei einer Bewegung entlang einer, insbesondere der vorher genannten, Bewegungsstrecke von der ersten Abdeckstellung in die zweite Abdeckstellung ausschließlich innerhalb eines, insbesondere des vorher genannten, ersten Teilabschnitts der Bewegungsstrecke der Abdeckung zumindest im Wesentlichen quer zur ersten Richtung und/oder zur zweiten Richtung bewegt wird. Es kann eine vorteilhaft direkte Bewegung der Abdeckung von der ersten Abdeckstellung in die zweite Abdeckstellung an dem Außenwandelement vorbei ermöglicht werden. Es kann eine vorteilhaft kompakte Ausgestaltung ermöglicht werden. Es kann eine vorteilhaft geschlossene Frontseite der Verstauvorrichtung erreicht werden, insbesondere da ein Abstand der Abdeckung und des Außenwandelements in der ersten Abdeckstellung vorteilhaft klein ausgebildet werden kann. Vorzugsweise ist das zweite Lager derart ausgebildet, dass die Abdeckung bei einer Bewegung entlang der Bewegungsstrecke von der ersten Abdeckstellung in die zweite Abdeckstellung nach dem ersten Teilabschnitt lediglich in die zweite Richtung bewegt wird.

Des Weiteren wird vorgeschlagen, dass der erste Teilabschnitt der Bewegungsstrecke der Abdeckung parallel zur ersten Richtung und/oder zur zweiten Richtung höchstens 5 cm, vorzugsweise höchstens 4 cm und bevorzugt höchstens 3 cm, beträgt. Es kann eine vorteilhaft direkte Bewegung der Abdeckung von der ersten Abdeckstellung in die zweite Abdeckstellung an dem Außenwandelement vorbei ermöglicht werden. Es kann eine vorteilhaft geschlossene Frontseite der Verstauvorrichtung erreicht werden, insbesondere da ein Abstand der Abdeckung und des Außenwandelements in der ersten Abdeckstellung vorteilhaft klein ausgebildet werden kann. Insbesondere weist der erste Teilabschnitt zumindest im Wesentlichen parallel zur ersten Richtung und/oder zur zweiten Richtung eine maximale Erstreckung auf, die höchstens 5 cm, vorzugsweise höchstens 4 cm und bevorzugt höchstens 3 cm, beträgt. Vorzugsweise ist das zweite Lager dazu vorgesehen, die Abdeckung innerhalb des ersten Teilabschnitts über die vollständige Einzugstiefe zumindest im Wesentlichen quer zur ersten Richtung und/oder zur zweiten Richtung zu bewegen.

Zudem wird vorgeschlagen, dass der Auszug zumindest ein Abdeckelement umfasst, welches zumindest im Wesentlichen schräg zur ersten Richtung und/oder zur zweiten Richtung angeordnet ist. Es kann ein vorteilhaft ansprechendes optisches Erscheinungsbild erreicht werden. Es kann vorteilhaft eine Integration der Verstauvorrichtung in eine schräge Seitenwand des Wohnfahrzeugs ermöglicht werden. Es kann eine vorteilhaft hohe Ausnutzung eines Bauraums erreicht werden. Unter "im Wesentlichen schräg" soll insbesondere eine Ausrichtung einer Geraden, einer Ebene oder einer Richtung, insbesondere einer Haupterstreckungsebene des Abdeckelements, relativ zu einer anderen Geraden, einer anderen Ebene oder einer Bezugsrichtung, insbesondere der ersten Richtung und/oder der zweiten Richtung, verstanden werden, wobei die Gerade, die Ebene oder die Richtung und die andere Gerade, die andere Ebene oder die Bezugsrichtung, insbesondere in einer Projektionsebene, einen Winkel aus einem Winkelbereich von 3° bis 87°, vorzugsweise von 5° bis 85° und bevorzugt von 8° bis 82°, aufspannen. Insbesondere unterscheidet sich die zumindest im Wesentlichen schräge Ausrichtung der Geraden, der Ebene oder der Richtung relativ zu der anderen Geraden, der anderen Ebene oder der Bezugsrichtung von einer parallelen Ausrichtung und von einer senkrechten Ausrichtung. Bevorzugt ist das Abdeckelement zumindest größtenteils, insbesondere zumindest im Wesentlichen vollständig, plattenförmig ausgebildet. Es ist aber auch denkbar, dass das Abdeckelement zumindest teilweise gebogen ausgebildet ist. Vorzugsweise ist die Haupterstreckungsebene des Abdeckelements zumindest im Wesentlichen schräg zur ersten Richtung und/oder zur zweiten Richtung angeordnet. Bevorzugt ist die Haupterstreckungsebene des Abdeckelements zumindest im Wesentlichen senkrecht zu einer durch die erste Richtung, die zweite Richtung und die Vorwärtsfahrtrichtung aufgespannte Ebene angeordnet. In einer bevorzugten Ausgestaltung beträgt ein Winkel zwischen der Haupterstreckungsebene des Abdeckelements und der ersten Richtung und/oder der zweiten Richtung einem Wert aus einem Wertebereich zwischen 15° und 75°, vorzugsweise zwischen 25° und 65° und bevorzugt zwischen 35° und 55°. Bevorzugt umfasst der Auszug zumindest ein Griffelement, welches insbesondere an dem Abdeckelement angeordnet ist. Es ist auch denkbar, dass das Abdeckelement und das Griffelement einstückig ausgebildet sind, wobei beispielsweise das Abdeckelement eine Ausnehmung oder einen Fortsatz zu einem Betätigen des Auszugs ausbildet.

Ferner wird vorgeschlagen, dass der Auszug zu einer Aufnahme zumindest eines elektrischen Geräts, insbesondere eines Displays, vorgesehen ist, wobei die Abdeckung dazu vorgesehen ist, bei einer Bewegung von der ersten Abdeckstellung in die zweite Abdeckstellung das elektrische Gerät zumindest größtenteils freizugeben. Es kann eine vorteilhaft kompakte Verstauung des elektrischen Geräts erreicht werden. Es kann ein vollständiges Freilegen des elektrischen Geräts bei einer vorteilhaft kurzen Auszugsstrecke ermöglicht werden, insbesondere da die Abdeckung beim Ausziehen des Auszugs in das Gehäuse bewegt werden kann. Es kann in der ersten Abdeckstellung beziehungsweise in der ersten Auszugsstellung eine vorteilhaft einfache Verstauung des elektrischen Geräts innerhalb des Gehäuses erreicht werden. Vorzugsweise umfasst der Auszug zumindest eine Aufnahmevorrichtung. Bevorzugt ist das elektrische Gerät über die Aufnahmevorrichtung an dem Auszug befestigt. Insbesondere ist der Auszug dazu vorgesehen, das elektrische Gerät bei einer Bewegung von der ersten Auszugsstellung in die zweite Auszugsstellung zumindest teilweise aus dem Gehäuse, insbesondere dem vom Gehäuse umschlossenen Raum, heraus zu bewegen. Vorzugsweise ist der Auszug, insbesondere die Aufnahmevorrichtung, derart ausgebildet, dass das elektrische Gerät über eine zumindest im Wesentlichen parallel zur ersten Richtung, zur zweiten Richtung und/oder zur Abdeckung ausgerichtete Aufnahmefläche des Auszugs und/oder der Aufnahmevorrichtung an dem Auszug befestigt ist. Das elektrische Gerät ist vorzugsweise als Display, beispielsweise eines Fernsehers, als Teil eines Spielekonsolensystems, als Teil eines Computersystems o. dgl., ausgebildet. Das elektrische Gerät, insbesondere eine Haupterstreckungsebene des elektrischen Geräts, ist vorzugsweise zumindest im Wesentlichen parallel zur ersten Richtung, zur zweiten Richtung und/oder zur Abdeckung angeordnet. Das elektrische Gerät ist vorzugsweise über die Öffnung des Auszugs zumindest in der zweiten Auszugsstellung zumindest im Wesentlichen vollständig einsehbar. Beispielsweise ist die Aufnahmevorrichtung als ein Schraubsystem, als ein System mit zumindest einem Saugnapf und einer zur Befestigung des Saugnapfs vorgesehenen Oberfläche o. dgl. ausgebildet. Insbesondere ist die Aufnahmevorrichtung korrespondierend zum elektrischen Gerät ausgebildet und/oder zumindest teilweise an dem elektrischen Gerät angeordnet.

Außerdem wird ein Wohnfahrzeug mit zumindest einer erfindungsgemäßen Verstauvorrichtung vorgeschlagen. Insbesondere umfasst das Wohnfahrzeug zumindest eine Innenausbauvorrichtung, wie beispielsweise eine Wand, eine Tür und/oder ein anderes Trennelement, wobei die Verstauvorrichtung vorzugsweise in die Innenausbauvorrichtung integriert ist.

Durch die erfindungsgemäße Ausgestaltung des Wohnfahrzeugs kann eine vorteilhaft hohe Flexibilität, insbesondere hinsichtlich einer Bewegungsstrecke der Abdeckung, erreicht werden. Es kann ein vorteilhaft großer über die Verstauvorrichtung umbauter Raum ermöglicht werden. Es kann eine vorteilhaft kompakte Anordnung der Verstauvorrichtung, insbesondere der Abdeckung, in der zweiten Abdeckstellung ermöglicht werden. Es kann eine besonders kompakte Anordnung der Verstauvorrichtung in dem Wohnfahrzeug erzielt werden. Es kann ein Benutzerkomfort verbessert werden. Es kann eine vorteilhaft bündige Anordnung der Abdeckung mit einer Außenwand des Gehäuses ermöglicht werden. Dadurch kann vorzugsweise eine vorteilhaft hohe Flexibilität hinsichtlich einer Nutzung der Abdeckung in Kombination mit der Außenwand erreicht werden. Beispielsweise kann die Abdeckung zusammen mit der Außenwand in der ersten Abdeckstellung zu einem Tragen von Bildern, Dartboards, Notizen o. dgl. innerhalb des Wohnfahrzeugs verwendet werden, insbesondere da die Abdeckung und die Außenwand zusammen zumindest im Wesentlichen mit einer gemeinsamen ebenen Außenfläche angeordnet werden können, welche eine Innenwand des Wohnfahrzeugs bildet.

Die erfindungsgemäße Verstauvorrichtung und/oder das erfindungsgemäße Wohnfahrzeug sollen/soll hierbei nicht auf die oben beschriebene Anwendung und Ausführungsform beschränkt sein. Insbesondere können/kann die erfindungsgemäße Verstauvorrichtung und/oder das erfindungsgemäße Wohnfahrzeug zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Außenansicht eines erfindungsgemäßen Wohnfahrzeugs mit einer erfindungsgemäßen Verstauvorrichtung,
- Fig. 2: eine schematische Darstellung eines Innenraums des erfindungsgemäßen Wohnfahrzeugs mit der erfindungsgemäßen Verstauvorrichtung in einer ersten Abdeckstellung,
- Fig. 3: eine schematische Darstellung des Innenraums des erfindungsgemäßen Wohnfahrzeugs mit der erfindungsgemäßen Verstauvorrichtung in einer zweiten Abdeckstellung,
- Fig. 4: eine schematische Darstellung einer Schnittansicht der erfindungsgemäßen Verstauvorrichtung von unten,
- Fig. 5a: eine schematische Darstellung eines inneren Bereichs der erfindungsgemäßen Verstauvorrichtung in einer perspektivischen Ansicht,
- Fig. 5b: eine Detailansicht eines Führungselements eines ersten Lagers der erfindungsgemäßen Verstauvorrichtung,
- Fig. 6: eine schematische Darstellung der erfindungsgemäßen Verstauvorrichtung in einer perspektivischen Außenansicht und
- Fig. 7: einen beispielhaften Ablauf eines Verfahrens zur Überführung der erfindungsgemäßen Verstauvorrichtung von der ersten Abdeckstellung in die zweite Abdeckstellung.

### Beschreibung des Ausführungsbeispiels

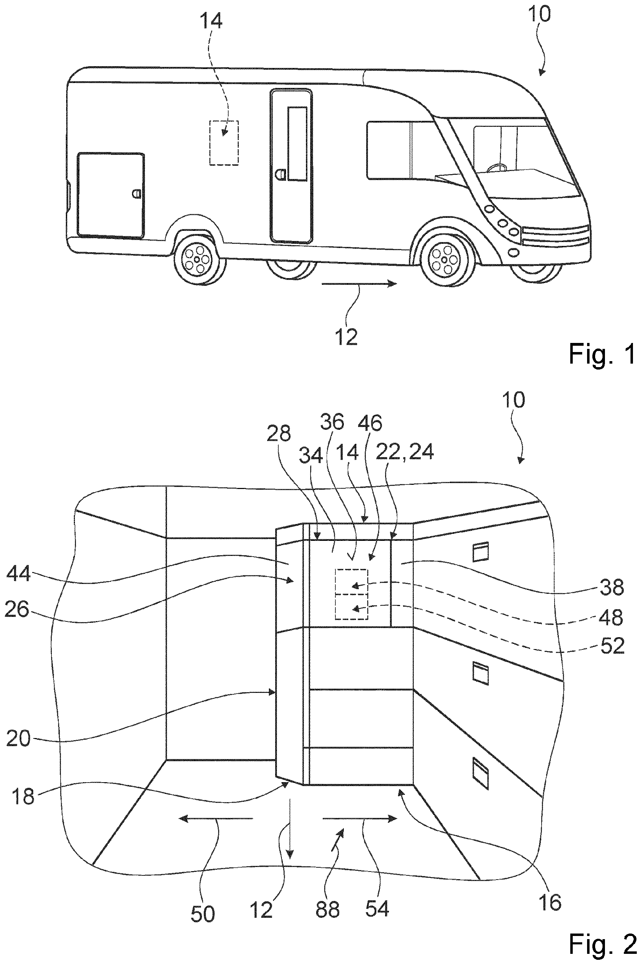

Figur 1 zeigt ein Wohnfahrzeug 10 in einer schematischen perspektivischen Ansicht. Das Wohnfahrzeug 10 ist im vorliegenden Fall als ein Wohnmobil ausgebildet. Alternativ könnte das Wohnfahrzeug 10 auch als ein Kastenwagen ausgebildet sein. Das Wohnfahrzeug 10 weist eine Vorwärtsfahrtrichtung 12 auf. Das Wohnfahrzeug 10 weist zumindest eine Verstauvorrichtung 14 auf. Die Verstauvorrichtung 14 ist beispielsweise Teil einer Küchenzeile, einer Wand oder eines anderen Trennelements des Wohnfahrzeugs 10. Es ist auch denkbar, dass die Verstauvorrichtung 14 die Küchenzeile, die Wand oder ein anderes Trennelement des Wohnfahrzeugs 10 ausbildet. Die Verstauvorrichtung 14 ist vorzugsweise in eine Innenausbauvorrichtung des Wohnfahrzeugs 10 integriert.

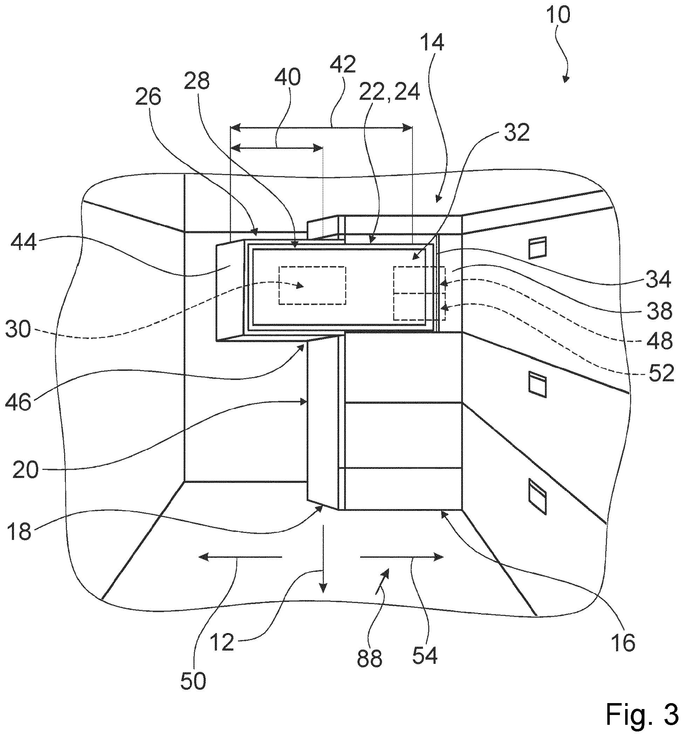

In den Figuren 2 und 3 ist jeweils ein Innenraum des Wohnfahrzeugs 10 gezeigt. Die Verstauvorrichtung 14 ist in eine einen Wohnraum des Wohnfahrzeugs 10 begrenzende Seitenwand 16 des Wohnfahrzeugs 10 integriert. Die Seitenwand 16 weist eine zumindest im Wesentlichen schräg ausgebildete Eckwand 18 auf, welche einen Übergang zu einer senkrecht zur Seitenwand 16 angeordneten weiteren Wand 20 bildet.

Die Verstauvorrichtung 14 umfasst ein Gehäuse 22. Das Gehäuse 22 weist eine Öffnung 24 auf. Die Öffnung 24 des Gehäuses 22 ist zumindest im Wesentlichen senkrecht zu einer Haupterstreckungsebene des Gehäuses 22 angeordnet. In einer Einbaustellung der Verstauvorrichtung 14 ist das Gehäuse 22 derart angeordnet, dass die Haupterstreckungsebene des Gehäuses 22 zumindest im Wesentlichen senkrecht zu der Vorwärtsfahrtrichtung 12 des Wohnfahrzeugs 10 ausgerichtet ist. Die Haupterstreckungsebene des Gehäuses 22 ist, insbesondere in einer Projektionsebene betrachtet, vorzugsweise zumindest im Wesentlichen senkrecht zu einer Horizontalebene ausgerichtet, welche die Vorwärtsfahrtrichtung 12 umfasst.

Die Verstauvorrichtung 14 umfasst einem Auszug 26. Der Auszug 26 weist eine erste Auszugsstellung auf, in welcher der Auszug 26 zumindest teilweise in dem Gehäuse 22 angeordnet ist. Der Auszug 26 weist eine zweite Auszugsstellung auf, in welcher der Auszug 26 zumindest teilweise außerhalb des Gehäuses 22 angeordnet ist. In Figur 2 ist der Auszug 26 in der ersten Auszugsstellung gezeigt. In Figur 3 ist der Auszug 26 in der zweiten Auszugsstellung gezeigt. Der Auszug 26 weist eine Öffnung 28 auf, die zumindest im Wesentlichen senkrecht zu einer Haupterstreckungsebene des Auszugs 26 ausgebildet ist. Insbesondere umfasst der Auszug 26 eine Aufnahmevorrichtung 30 zu einer Aufnahme eines elektrischen Geräts 32 (siehe Figur 3). Vorzugsweise ist die Öffnung 28 des Auszugs 26 derart ausgebildet, dass das elektrische Gerät 32 aus zumindest einer Richtung zumindest im Wesentlichen vollständig einsehbar ist (siehe Figur 3). Die Haupterstreckungsebene des Auszugs 26 ist zumindest im Wesentlichen parallel zur Haupterstreckungsebene des Gehäuses 22 angeordnet. In einer Einbaustellung der Verstauvorrichtung 14 ist der Auszug 26 derart angeordnet, dass die Haupterstreckungsebene des Auszugs 26 zumindest im Wesentlichen senkrecht zur Vorwärtsfahrtrichtung 12 des Wohnfahrzeugs 10 angeordnet ist. Es sind aber auch andere Ausgestaltungen der Verstauvorrichtung 14 denkbar, wobei beispielsweise die Haupterstreckungsebene des Auszugs 26 zumindest im Wesentlichen parallel oder zumindest im Wesentlichen schräg zur Vorwärtsfahrtrichtung 12 des Wohnfahrzeugs 10 angeordnet ist.

Der Verstauvorrichtung 14 weist eine Abdeckung 34 auf. Die Abdeckung 34 weist eine erste Abdeckstellung auf, in welcher die Abdeckung 34 den Auszug 26, insbesondere die Öffnung 28 des Auszugs 26 zumindest größtenteils, insbesondere zumindest im Wesentlichen vollständig, verdeckt. Die Abdeckung 34 weist eine zweite Abdeckstellung auf, in welcher die Abdeckung 34 den Auszug 26, insbesondere die Öffnung 28 des Auszugs 26, zumindest teilweise, insbesondere zumindest größtenteils, freigibt. In Figur 2 ist die Abdeckung 34 in der ersten Abdeckstellung gezeigt. In Figur 3 ist die Abdeckung 34 in der zweiten Abdeckstellung gezeigt. Die Abdeckung 34, insbesondere ein Abdeckungselement der Abdeckung 34, ist plattenförmig ausgebildet und weist eine zumindest im Wesentlichen vollständig ebenflächige Außenfläche 36 auf. Insbesondere ist die Außenfläche 36 der Abdeckung 34 an einer dem Gehäuse 22 abgewandten Seite der Abdeckung 34 und/oder einer einem Innenraum des Wohnfahrzeugs 10 zugewandten Seite der Abdeckung 34 angeordnet. Die Abdeckung 34 weist eine Haupterstreckungsebene auf, die, insbesondere in der ersten Abdeckstellung und der zweiten Abdeckstellung zumindest im Wesentlichen parallel zur Haupterstreckungsebene des Auszugs 26 und/oder des Gehäuses 22 angeordnet ist. In einer Einbaustellung der Verstauvorrichtung 14 ist die Abdeckung 34 insbesondere derart angeordnet, dass die Haupterstreckungsebene der Abdeckung 34 zumindest im Wesentlichen senkrecht zur Vorwärtsfahrtrichtung 12 des Wohnfahrzeugs 10 angeordnet ist. Es sind auch andere Ausgestaltungen der Abdeckung 34 denkbar, beispielsweise mit einer zumindest teilweise gebogenen Form, wobei insbesondere ein Außenwandelement 38 der Verstauvorrichtung 14 ebenfalls zumindest teilweise gebogen ausgebildet ist. Vorzugsweise ist das Außenwandelement 38 hinsichtlich einer Höhe und/oder einer Grundform korrespondierend zur Abdeckung 34 ausgebildet. In dem in den Figuren gezeigten Ausführungsbeispiel ist das Außenwandelement 38 zumindest im Wesentlichen vollständig ebenflächig ausgebildet.

Der Auszug 26 ist dazu vorgesehen, die zumindest zwei verschiedenen Auszugsstellungen, insbesondere die erste Auszugsstellung und die zweite Auszugsstellung, einzunehmen. In der ersten Auszugsstellung (siehe Figur 2) ist der Auszug 26 zumindest teilweise in dem Gehäuse 22 angeordnet. Im, in den Figuren gezeigten Ausführungsbeispiel der Verstauvorrichtung 14 ist der Auszug 26 in der ersten Auszugsstellung zumindest im Wesentlichen vollständig innerhalb des Gehäuses 22, insbesondere innerhalb eines vom Gehäuse 22 umschlossenen Raums, angeordnet. In der zweiten Auszugsstellung (siehe Figur 3) ist der Auszug 26 zumindest teilweise außerhalb des Gehäuses 22, insbesondere außerhalb des vom Gehäuse 22 umschlossenen Raums, angeordnet. Der Auszug 26 ist in der zweiten Auszugsstellung höchstens zu einem Großteil außerhalb des Gehäuses 22, insbesondere außerhalb des vom Gehäuse 22 umschlossenen Raums, angeordnet. In der zweiten Auszugsstellung ist der Auszug 26 um eine Strecke 40, welche höchstens 60 % einer Haupterstreckung 42 des Auszugs 26 entspricht und welche insbesondere zumindest im Wesentlichen senkrecht zur Vorwärtsfahrtrichtung 12 verläuft, aus dem Gehäuse 22 ausgezogen. Insbesondere ist die Haupterstreckung 42 des Auszugs 26 zumindest im Wesentlichen senkrecht zur Vorwärtsfahrtrichtung 12 angeordnet.

Die Abdeckung 34 ist dazu vorgesehen, die zumindest zwei verschiedenen Abdeckstellungen, insbesondere die erste Abdeckstellung und die zweite Abdeckstellung, einzunehmen. In der ersten Abdeckstellung (siehe Figur 2) bedeckt die Abdeckung 34 zumindest teilweise den Auszug 26, insbesondere die Öffnung 28 des Auszugs 26. Vorzugsweise verdeckt der Auszug 26 in der ersten Abdeckstellung zusammen mit dem Gehäuse 22 den Auszug 26 zumindest größtenteils, insbesondere zumindest im Wesentlichen vollständig, vorzugsweise mit Ausnahme eines Abdeckelements 44 des Auszugs 26. Das Abdeckelement 44 ist in der ersten Auszugsstellung vorzugsweise als Teil der Wand 20, insbesondere der schrägen Eckwand 18, des Wohnfahrzeugs 10 ausgebildet. Im vorliegenden Fall bedeckt die Abdeckung 34 in der ersten Abdeckstellung den Auszug 26, insbesondere die Öffnung 28 des Auszugs 26, vollständig. In der zweiten Abdeckstellung (siehe Figur 3) gibt die Abdeckung 34 zumindest teilweise den Auszug 26, insbesondere die Öffnung 28 des Auszugs 26, und das elektrische Gerät 32 frei.

Die Verstauvorrichtung 14 weist eine Lagereinheit 46 auf. Die Lagereinheit 46 weist zumindest ein erstes Lager 48 auf. Das erste Lager 48 ist dazu vorgesehen, den Auszug 26 entlang wenigstens einer ersten Richtung 50 von der ersten Auszugsstellung in die zweite Auszugsstellung bewegbar zu lagern. Die Lagereinheit 46 weist zumindest ein zweites Lager 52 auf. Das zweite Lager 52 ist dazu vorgesehen, die Abdeckung 34 entlang zumindest einer zweiten Richtung 54 von der ersten Abdeckstellung in die zweite Abdeckstellung bewegbar zu lagern. Es ist denkbar, dass eine Haupterstreckungsachse des ersten Lagers 48 und/oder des zweiten Lagers 52 die erste Richtung 50 und die zweite Richtung 54 definiert/definieren. In dem in den Figuren gezeigten Ausführungsbeispiel sind die erste Richtung 50 und die zweite Richtung 54 zumindest im Wesentlichen senkrecht zur Vorwärtsfahrtrichtung 12 ausgerichtet. Die erste Richtung 50 und die zweite Richtung 54 sind antiparallel zueinander angeordnet. Vorzugsweise umfasst eine Horizontalebene die Vorwärtsfahrtrichtung 12, die erste Richtung 50 und die zweite Richtung 54. Es ist aber auch denkbar, dass die Verstauvorrichtung 14 in ein Bodenelement oder ein Deckenelement des Wohnfahrzeugs 10 integriert ist, wobei beispielsweise die erste Richtung 50 und die zweite Richtung 54 zumindest im Wesentlichen senkrecht zu einer Horizontalebene und der Vorwärtsfahrtrichtung 12 ausgerichtet sind. Der Auszug 26 ist zu einer Aufnahme des elektrischen Geräts 32 vorgesehen, wobei die Abdeckung 34 dazu vorgesehen ist, bei einer Bewegung von der ersten Abdeckstellung in die zweite Abdeckstellung das elektrische Gerät 32 zumindest größtenteils freizugeben.

Der Auszug 26 umfasst die Aufnahmevorrichtung 30. Bevorzugt ist das elektrische Gerät 32 über die Aufnahmevorrichtung 30 an dem Auszug 26 befestigt. Insbesondere ist der Auszug 26 dazu vorgesehen, das elektrische Gerät 32 bei einer Bewegung von der ersten Auszugsstellung in die zweite Auszugsstellung zumindest teilweise aus dem Gehäuse 22, insbesondere dem vom Gehäuse 22 umschlossenen Raum, heraus zu bewegen. Das elektrische Gerät 32 ist als ein Display, beispielsweise eines Fernsehers, als Teil eines Spielekonsolensystems, als Teil eines Computersystems o. dgl., ausgebildet. Es sind aber auch andere Ausgestaltungen des elektrischen Geräts 32 denkbar, beispielsweise als ein Touch-Bedienfeld, als ein Telefon o.dgl. Das elektrische Gerät 32 ist vorzugsweise über die Öffnung 28 des Auszugs 26 zumindest in der zweiten Auszugsstellung zumindest im Wesentlichen vollständig einsehbar. Die Aufnahmevorrichtung 30 ist insbesondere als ein Schraubsystem ausgebildet. Insbesondere ist die Aufnahmevorrichtung 30 korrespondierend zum elektrischen Gerät 32 ausgebildet und/oder zumindest teilweise an dem elektrischen Gerät 32 angeordnet. Es sind aber auch andere Ausgestaltungen der Aufnahmevorrichtung 30 denkbar. Vorzugsweise ist der Auszug 26, insbesondere die Aufnahmevorrichtung 30, derart ausgebildet, dass das elektrische Gerät 32 über eine zumindest im Wesentlichen parallel zur ersten Richtung 50, zur zweiten Richtung 54 und/oder zur Abdeckung 34 ausgerichtete Aufnahmefläche des Auszugs 26 und/oder der Aufnahmevorrichtung 30 an dem Auszug 26 befestigt ist. Das als Display ausgebildete elektrische Gerät 32, insbesondere eine Haupterstreckungsebene des elektrischen Geräts 32, ist zumindest im Wesentlichen parallel zur ersten Richtung 50, zur zweiten Richtung 54 und/oder zur Abdeckung 34 angeordnet. Insbesondere ist die Verstauvorrichtung 14 dazu vorgesehen, das elektrische Gerät 32 in einem Betriebszustand, insbesondere in der ersten Auszugsstellung und/oder der ersten Abdeckstellung, in dem Gehäuse und/oder hinter einer Wand, insbesondere der Wand 20 und/oder der Seitenwand 16, des Wohnfahrzeugs 10 zu verstauen und in einem weiteren Betriebszustand, insbesondere in der zweiten Auszugsstellung und/oder der zweiten Abdeckstellung, zu einer Verwendung durch einen, in einem über die Wand begrenzten Wohnraum des Wohnfahrzeugs 10 befindlichen Benutzer freizugeben und/oder aus der Wand auszufahren.

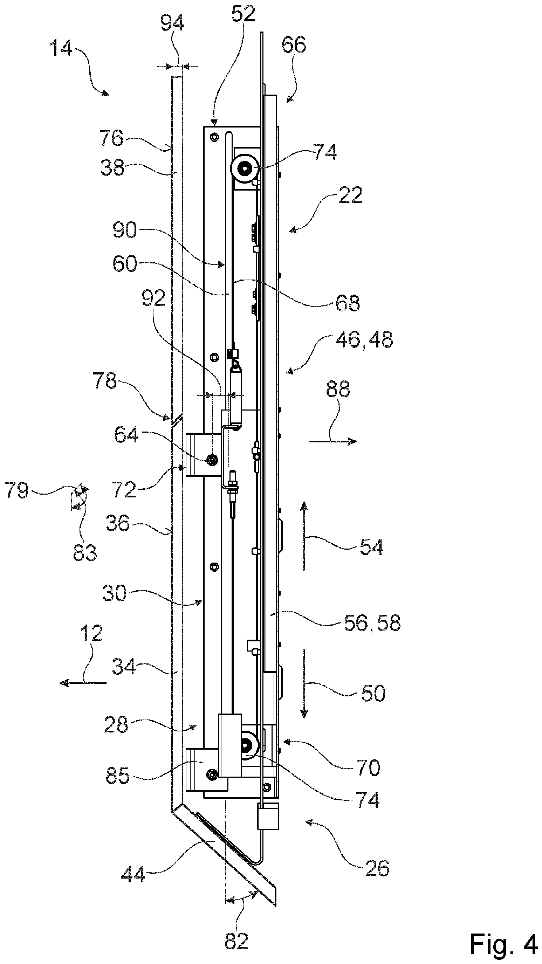

In Figur 4 ist die Verstauvorrichtung 14 separat, und insbesondere ohne das elektrische Gerät 32, in einer Schnittansicht von unten in der ersten Auszugsstellung gezeigt. Insbesondere erstreckt sich eine Schnittebene der Schnittansicht beziehungsweise die Bildebene der Figur 4 senkrecht zur Haupterstreckungsebene des Gehäuses 22 und/oder des Auszugs 26 und zumindest im Wesentlichen parallel zur ersten Richtung 50 und zur zweiten Richtung 54. Die Verstauvorrichtung 14 umfasst das Gehäuse 22, den Auszug 26, welcher in der ersten Auszugsstellung (in Figur 4 gezeigt) zumindest teilweise in dem Gehäuse 22 angeordnet ist und welcher in der zweiten Auszugsstellung zumindest teilweise außerhalb des Gehäuses 22 angeordnet ist, die Abdeckung 34, welche in der ersten Abdeckstellung (in Figur 4 gezeigt) zumindest teilweise den Auszug 26, insbesondere die Öffnung 28 des Auszugs 26, bedeckt und welche in der zweiten Abdeckstellung zumindest teilweise den Auszug 26 freigibt, und die Lagereinheit 46, welche zumindest das erste Lager 48 und das zweite Lager 52 umfasst. Das erste Lager 48 ist dazu vorgesehen, den Auszug 26 entlang der ersten Richtung 50 von der ersten Auszugsstellung in die zweite Auszugsstellung bewegbar zu lagern. Das zweite Lager 52 ist dazu vorgesehen, die Abdeckung 34 abschnittsweise entlang der zweiten Richtung 54 von der ersten Abdeckstellung in die zweite Abdeckstellung bewegbar zu lagern. Die erste Richtung 50 und die zweite Richtung 54 sind zumindest im Wesentlichen einander entgegengerichtet. Das zweite Lager 52 ist dazu vorgesehen, die Abdeckung 34 bei einer Bewegung von der ersten Abdeckstellung in die zweite Abdeckstellung und bei einer Bewegung von der zweiten Abdeckstellung in die erste Abdeckstellung zumindest abschnittsweise zumindest im Wesentlichen quer zur ersten Richtung 50 und/oder zur zweiten Richtung 54 zu bewegen. Die erste Richtung 50 ist zumindest im Wesentlichen parallel zu einer Haupterstreckungsebene des Auszugs 26 und/oder des Gehäuses 22 angeordnet. Die zweite Richtung 54 ist zumindest im Wesentlichen parallel zu einer Haupterstreckungsebene des Auszugs 26 und/oder des Gehäuses 22 angeordnet.

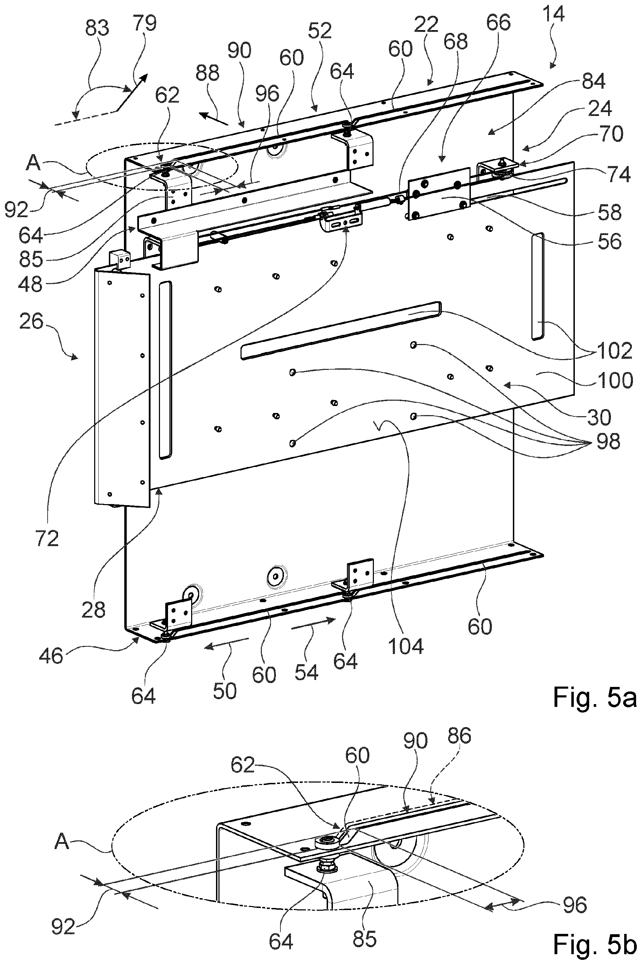

Das erste Lager 48 ist als ein Translativlager ausgebildet, welches zu einer translativen Lagerung vorgesehen ist. Insbesondere ist das erste Lager 48 als ein Linearlager ausgebildet. Das erste Lager 48 weist zumindest ein Lagerelement 56 auf. Ferner weist das erste Lager 48 zumindest ein korrespondierend zum Lagerelement 56 ausgebildetes weiteres Lagerelement 58 auf. Das Lagerelement 56 ist als Fortsatz ausgebildet. Das weitere Lagerelement 58 ist als eine Ausnehmung ausgebildet, in der das Lagerelement 56 zumindest teilweise angeordnet ist. Das Lagerelement 56 ist entlang des weiteren Lagerelements 58 in die erste Richtung 50 oder in die zweite Richtung 54 bewegbar. Insbesondere ist der Auszug 26, insbesondere das Lagerelement 56 über das weitere Lagerelement 58 auf eine Bewegung entlang einer zumindest im Wesentlichen geradlinigen Strecke, welche zumindest im Wesentlichen parallel zur ersten Richtung 50 und/oder zur zweiten Richtung 54 angeordnet ist, begrenzt. Das Lagerelement 56 ist an einer Innenwand des Gehäuses 22 oder an einem Innenausbauboden des Wohnfahrzeugs 10 befestigt. Das weitere Lagerelement 58 ist an dem Auszug 26 angeordnet. Bei einer Lagerung des Auszugs 26 greifen das Lagerelement 56 und das weitere Lagerelement 58 ineinander, wodurch der Auszug 26 entlang der ersten Richtung 50 und/oder der zweiten Richtung 54 hin und her bewegbar ist. Das zweite Lager 52 ist als ein Translativlager ausgebildet, welches zu einer translativen Lagerung vorgesehen ist. Das zweite Lager 52 umfasst vier Führungselemente 60 (siehe Figur 5a) zu einer Führung der Abdeckung 34, welche jeweils in zumindest einem Teilabschnitt 62 zumindest im Wesentlichen quer zur ersten Richtung 50 und/oder zur zweiten Richtung 54 ausgebildet sind. Das zweite Lager 52 umfasst vier als Führungsstifte ausgebildete weitere Führungselemente 64 (siehe Figur 5a), welche jeweils zu einer Anordnung innerhalb eines Führungselements 60 der zwei Führungselemente 60 vorgesehen sind. Die Lagereinheit 46 ist zu einer reversiblen Überführung des Auszugs 26 zwischen der ersten Auszugsstellung und der zweiten Auszugsstellung und zu einer reversiblen Überführung der Abdeckung 34 zwischen der ersten Abdeckstellung und der zweiten Abdeckstellung vorgesehen. Es sind aber auch andere Ausgestaltungen des zweiten Lagers 52 denkbar, beispielsweise mit einer von Vier verschiedenen Anzahl an Führungselementen 60 und/oder weiteren Führungselementen 64.

Die Verstauvorrichtung 14 weist eine Koppeleinheit 66 auf, die dazu vorgesehen ist, den Auszug 26 und die Abdeckung 34 bewegungstechnisch miteinander zu koppeln. Die Koppeleinheit 66 umfasst ein Koppelelement 68, welches dazu vorgesehen ist, eine Bewegung des Auszugs 26 in die erste Richtung 50 in eine Bewegung der Abdeckung 34 in die zweite Richtung 54 umzuwandeln und vorzugsweise umgekehrt. Zusätzlich ist das Koppelelement 68 dazu vorgesehen, eine Bewegung des Auszugs 26 in die zweite Richtung 54 in eine Bewegung der Abdeckung 34 in die erste Richtung 50 umzuwandeln und vorzugsweise umgekehrt. Die Koppeleinheit 66 koppelt insbesondere die Abdeckstellung und die Auszugsstellung miteinander, so dass diese sich gegenseitig bedingen. Das Koppelelement 68 verbindet den Auszug 26 zumindest mittelbar mit der Abdeckung 34. In der in den Figuren gezeigten Ausgestaltung verbindet das Koppelelement 68 den Auszug 26 unmittelbar mit der Abdeckung 34. Das Koppelelement 68 ist als ein biegeschlaffes Bauteil ausgebildet. Insbesondere ist das Koppelelement 68 als eine Kugelkette, insbesondere Endloskugelkette, ausgebildet. An einer Position 70 ist das Koppelelement 68 fest mit dem Auszug 26 verbunden. An einer weiteren Position 72 ist das Koppelelement 68 fest mit der Abdeckung 34 verbunden. Die Koppeleinheit 66 weist zwei Umlenkelemente 74 auf. Die Umlenkelemente 74 sind jeweils dazu vorgesehen, das Koppelelement 68 umzulenken. Die Umlenkelemente 74 sind jeweils als eine Umlenkrolle ausgebildet. Die Umlenkelemente 74 sind fest an dem Gehäuse 22 angeordnet. Die zwei Umlenkelemente 74 sind entlang der ersten Richtung 50 und/oder der zweiten Richtung 54 versetzt zueinander angeordnet. Die zwei Umlenkelemente 74 spannen gemeinsam das Koppelelement 68 auf, wobei insbesondere das Koppelelement 68 innerhalb einer zumindest im Wesentlichen senkrecht zur Haupterstreckungsebene des Gehäuses 22 und/oder des Auszugs 26 angeordneten Horizontalebene angeordnet ist. Es sind aber auch andere Ausgestaltungen der Koppeleinheit 66, insbesondere des Koppelelements 68 und/oder der Umlenkelemente 74, denkbar.

Das Außenwandelement 38 des Gehäuses 22 weist eine Außenfläche 76 auf, wobei die Außenfläche 36 der Abdeckung 34 in der ersten Abdeckstellung zumindest im Wesentlichen bündig zu der Außenfläche 76 des Außenwandelements 38 angeordnet ist und in der zweiten Abdeckstellung entlang der zweiten Richtung 54 betrachtet neben dem Außenwandelement 38 angeordnet ist. Das Außenwandelement 38 ist an einer gleichen Seite der Verstauvorrichtung 14 angeordnet wie die Abdeckung 34. Die Außenfläche 36 der Abdeckung 34 und die Außenfläche 76 des Außenwandelements 38 sind jeweils in einem Nahbereich von aneinander zugewandten Seiten oder Kanten 78 parallel zu einer Referenzebene ausgerichtet und weisen zu dieser Referenzebene an den aneinander zugewandten Seiten oder Kanten 78 jeweils einen maximalen Abstand von höchstens 1 mm, vorzugsweise höchstens 0,5 mm und bevorzugt höchstens 0,2 mm, auf. Insbesondere umfasst die Referenzebene die Außenfläche 36 der Abdeckung 34 und die Außenfläche 76 des Außenwandelements 38. Vorzugsweise sind die Außenfläche 36 der Abdeckung 34 und die Außenfläche 76 des Außenwandelements 38 zumindest im Wesentlichen vollständig ebenflächig ausgebildet. Es ist auch denkbar, dass die Außenfläche 36 der Abdeckung 34 und/oder die Außenfläche 76 des Außenwandelements 38 lediglich in einem dem Außenwandelement 38 und/oder der Abdeckung 34 zugewandten Teilbereich ebenflächig ausgebildet sind/ist. Es sind aber auch andere Ausgestaltungen der Außenfläche 36 der Abdeckung 34 und des Außenwandelements 38 denkbar.

Das Abdeckelement 44 des Auszugs 26 ist zumindest im Wesentlichen schräg zur ersten Richtung 50 und/oder zur zweiten Richtung 54 angeordnet. Insbesondere unterscheidet sich die zumindest im Wesentlichen schräge Ausrichtung des Abdeckelements 44 von einer parallelen Ausrichtung und von einer senkrechten Ausrichtung. Es ist jedoch auch denkbar, dass das Abdeckelement 44 zumindest im Wesentlichen senkrecht zur ersten Richtung 50 und/oder zur zweiten Richtung 54 angeordnet ist, wobei insbesondere das Abdeckelement 44 zumindest in der ersten Auszugsstellung als Teil einer zumindest im Wesentlichen senkrecht zur Abdeckung 34 ausgerichteten Wandfront des Wohnfahrzeugs 10 ausgebildet ist. Das Abdeckelement 44 ist zumindest größtenteils, insbesondere zumindest im Wesentlichen vollständig, plattenförmig ausgebildet. Es ist aber auch denkbar, dass das Abdeckelement 44 zumindest teilweise gebogen ausgebildet ist. Vorzugsweise ist die Haupterstreckungsebene des Abdeckelements 44 zumindest im Wesentlichen schräg zur ersten Richtung 50 und/oder zur zweiten Richtung 54 angeordnet. Bevorzugt ist die Haupterstreckungsebene des Abdeckelements 44 zumindest im Wesentlichen senkrecht zu einer durch die erste Richtung 50, die zweite Richtung 54 und die Vorwärtsfahrtrichtung 12 aufgespannte Ebene angeordnet. Ein Winkel 82 zwischen der Haupterstreckungsebene des Abdeckelements 44 und der ersten Richtung 50 und/oder der zweiten Richtung 54 entspricht vorzugsweise einem Wert aus einem Wertebereich zwischen 15° und 75°, vorzugsweise zwischen 25° und 65° und bevorzugt zwischen 35° und 55°. Vorzugsweise entspricht eine mittlere Dicke 94 der Abdeckung 34 und/oder des Außenwandelements 38 einem Wert aus einem Wertebereich von 0,5 cm bis 3 cm, vorzugsweise von 1 cm bis 2,5 cm und bevorzugt von 1,5 cm bis 2 cm. Es ist denkbar, dass die Abdeckung 34 und das Außenwandelement 38 eine unterschiedliche oder eine gleiche mittlere Dicke 94 aufweisen. Besonders bevorzugt ist die mittlere Dicke 94 der Abdeckung 34 und/oder des Außenwandelements 38 kleiner als eine Einzugstiefe 92.

Bevorzugt ist das zweite Lager 52 dazu vorgesehen, die Abdeckung 34 bei einer Bewegung von der ersten Abdeckstellung in die zweite Abdeckstellung und bei einer Bewegung von der zweiten Abdeckstellung in die erste Abdeckstellung zumindest abschnittsweise in und/oder entgegen eine zumindest im Wesentlichen quer zur ersten Richtung 50 und/oder zur zweiten Richtung 54 ausgerichtete Versatzrichtung 79 beweglich zu lagern. Insbesondere entspricht ein Winkel 83 zwischen der Versatzrichtung 79 und der ersten Richtung 50 und/oder der zweiten Richtung 54 einem Wert aus einem Wertebereich zwischen 3° und 177°, vorzugsweise zwischen 5° und 175° und bevorzugt zwischen 8° und 172°.

In Figur 5a ist eine perspektivische Ansicht eines Teilbereichs der Verstauvorrichtung 14 gezeigt, insbesondere ohne die Abdeckung 34, das Abdeckelement 44 und das Außenwandelement 38. In Figur 5b ist eine aus der Figur 5a herausgezogene Detailansicht (A) eines der Führungselemente 60 gezeigt. Das Gehäuse 22 umfasst einen Rahmen 84, welcher dazu vorgesehen ist, die Koppeleinheit 66 und die Lagereinheit 46, insbesondere die Führungselemente 60 des zweiten Lagers 52 und das Lagerelement 56 des ersten Lagers 48 an der Innenausbauvorrichtung des Wohnfahrzeugs 10 zu befestigen. Bevorzugt ist das Außenwandelement 38 an dem Rahmen 84 befestigt. Vorzugsweise ist die Koppeleinheit 66 dazu vorgesehen, die Abdeckung 34 bei der Bewegung von der ersten Abdeckstellung in die zweite Abdeckstellung und bei der Bewegung von der zweiten Abdeckstellung in die erste Abdeckstellung in die erste Richtung 50 und/oder die zweite Richtung 54 zu bewegen, wobei die Abdeckung 34 durch das biegeschlaffe Koppelelement 68 entlang einer durch die Führungselemente 60 des zweiten Lagers 52 vorgegebenen Bewegungsstrecke 86 bewegt wird. Besonders bevorzugt ist die vorgegebene Bewegungsstrecke 86 abschnittsweise zumindest im Wesentlichen quer zur ersten Richtung 50 und/oder zur zweiten Richtung 54 ausgebildet. Die Führungselemente 60 sind jeweils als eine Führungsnut ausgebildet. Es sind aber auch andere Ausgestaltungen der Führungselemente 60 denkbar. Vorzugsweise geben die Führungselemente 60 die Bewegungsstrecke 86 der Abdeckung 34 vor. Besonders bevorzugt ist die Abdeckung 34 durch die Führungselemente 60 auf eine Bewegung entlang und/oder innerhalb der Bewegungsstrecke 86 begrenzt. Die Führungselemente 60 sind jeweils an einer Innenwand des Gehäuses 22, insbesondere an dem Rahmen 84, angeordnet, insbesondere befestigt, und vorzugsweise relativ zur Abdeckung 34 und/oder dem Auszug 26 unbeweglich angeordnet. Zwei Führungselemente 60 der vier Führungselemente 60 sind an einer Oberseite des Gehäuses 22, insbesondere des Rahmens 84, angeordnet. Zwei weitere Führungselemente 60 der vier Führungselemente 60 sind an einer Unterseite des Gehäuses 22, insbesondere des Rahmens 84, angeordnet. Die vier weiteren Führungselemente 64 sind jeweils zu einer Kopplung mit einem der vier Führungselemente 60 vorgesehen. Insbesondere sind die weiteren Führungselemente 64 über Befestigungsmittel 85 an der Abdeckung 34 befestigt. Die Abdeckung 34 ist mittels der an der Abdeckung 34 befestigten weiteren Führungselemente 64 über die Führungselemente 60 entlang der Bewegungstrecke 86 beweglich gelagert. Insbesondere sind die weiteren Führungselemente 64 jeweils korrespondierend zu einer Ausgestaltung der Führungselemente 60 ausgebildet. Insbesondere sind die vier weiteren Führungselemente 64 jeweils als ein Führungsstift ausgebildet. Es sind aber auch andere Ausgestaltungen der weiteren Führungselemente 64 denkbar. Besonders bevorzugt sind die weiteren Führungselemente 64 über die Führungselemente 60 entlang der Bewegungsstrecke 86 beweglich gelagert. Bevorzugt sind die weiteren Führungselemente 64 jeweils an der Abdeckung 34 angeordnet, insbesondere befestigt. Zwei weitere Führungselemente 64 der vier weiteren Führungselemente 64 sind an einer Oberseite der Abdeckung 34 angeordnet. Zwei weitere der vier weiteren Führungselemente 64 sind an einer Unterseite der Abdeckung 34 angeordnet. Die zwei an der Oberseite der Abdeckung 34 angeordneten weiteren Führungselemente 64 sind entlang der ersten Richtung 50 oder der zweiten Richtung 54 betrachtet hintereinander angeordnet. Die zwei an der Unterseite der Abdeckung 34 angeordneten weiteren Führungselemente 64 sind entlang der ersten Richtung 50 oder der zweiten Richtung 54 betrachtet hintereinander angeordnet. Die zwei an der Oberseite des Gehäuses 22, insbesondere des Rahmens 84, angeordneten Führungselemente 60 sind entlang der ersten Richtung 50 oder der zweiten Richtung 54 betrachtet hintereinander angeordnet. Die zwei an der Unterseite des Gehäuses 22, insbesondere des Rahmens 84, angeordneten Führungselemente 60 sind entlang der ersten Richtung 50 oder der zweiten Richtung 54 betrachtet hintereinander angeordnet.

Das zweite Lager 52 ist dazu vorgesehen, die Abdeckung 34 bei einer Bewegung von der ersten Abdeckstellung in die zweite Abdeckstellung zumindest teilweise in Richtung des Auszugs 26, insbesondere in eine Einzugsrichtung 88, zu bewegen. Das zweite Lager 52 ist dazu vorgesehen, die Abdeckung 34 bei einer Bewegung von der zweiten Abdeckstellung in die erste Abdeckstellung zumindest teilweise von dem Auszug 26 weg zu bewegen. Vorzugsweise ist das zweite Lager 52 dazu vorgesehen, die Abdeckung 34 bei einer Bewegung von der ersten Abdeckstellung in die zweite Abdeckstellung in Richtung der Haupterstreckungsebene der Verstauvorrichtung 14, insbesondere des Gehäuses 22 und/oder des Auszugs 26, und/oder in die von der ersten Seite zur dritten Seite hin ausgerichtete Einzugsrichtung 88 zu bewegen.

Die Führungselemente 60 sind jeweils in Teilabschnitten 62, 90 der Bewegungsstrecke 86 der Abdeckung 34 von der ersten Abdeckstellung in die zweite Abdeckstellung jeweils zumindest im Wesentlichen geradlinig ausgebildet, wobei die Teilabschnitte 62, 90 zusammen die zumindest im Wesentlichen vollständige Bewegungsstrecke 86 bilden. Die Führungselemente 60 sind in genau einem, insbesondere einem ersten, Teilabschnitt 62 der Teilabschnitte 62, 90 der Bewegungsstrecke 86 zumindest im Wesentlichen geradlinig ausgebildet und zumindest im Wesentlichen quer zur ersten Richtung 50 und/oder zur zweiten Richtung 54 ausgerichtet. Insbesondere ist der erste Teilabschnitt 62 zumindest im Wesentlichen quer zur ersten Richtung 50 und/oder zur zweiten Richtung 54 ausgerichtet. Bevorzugt sind die Führungselemente 60 jeweils mit Ausnahme des ersten Teilabschnitts 62 in allen Teilabschnitten 62, 90 der Bewegungsstrecke 86 zumindest im Wesentlichen parallel zur ersten Richtung 50 und/oder zur zweiten Richtung 54 ausgerichtet. Insbesondere ist die Bewegungsstrecke 86 zumindest im Wesentlichen frei von Rundungen ausgebildet. Vorzugsweise verläuft der erste Teilabschnitt 62 zumindest im Wesentlichen parallel zur Versatzrichtung 79. Insbesondere ist das zweite Lager 52 dazu vorgesehen, die Abdeckung 34 bei einer Bewegung innerhalb des ersten Teilabschnitts 62 in oder entgegen die Versatzrichtung 79 beweglich zu lagern.

Das zweite Lager 52 ist derart ausgebildet, dass die Abdeckung 34 bei einer Bewegung entlang der Bewegungsstrecke 86 von der ersten Abdeckstellung in die zweite Abdeckstellung innerhalb des ersten Teilabschnitts 62 der Bewegungsstrecke 86 der Abdeckung 34 um eine Einzugstiefe 92 von mindestens 1 cm, vorzugsweise mindestens 2 cm und bevorzugt mindestens 3 cm, zumindest im Wesentlichen senkrecht zur ersten Richtung 50 und/oder zur zweiten Richtung 54 bewegt wird. Die Einzugstiefe 92 ist zumindest im Wesentlichen senkrecht zur ersten Richtung 50 und zur zweiten Richtung 54 ausgerichtet. Bevorzugt ist die Einzugstiefe 92 als eine maximale Verschiebung der Abdeckung 34 bei der Bewegung von der ersten Abdeckstellung in die zweite Abdeckstellung und bei der Bewegung von der zweiten Abdeckstellung in die erste Abdeckstellung in eine zumindest im Wesentlichen senkrecht zur ersten Richtung 50 und zur zweiten Richtung 54 ausgerichtete Einzugsrichtung 88 ausgebildet. Bevorzugt ist das zweite Lager 52 dazu vorgesehen, die Abdeckung 34 bei einer Bewegung von der ersten Abdeckstellung in die zweite Abdeckstellung zumindest teilweise in die Einzugsrichtung 88 zu bewegen. Besonders bevorzugt setzt sich die Bewegung der Abdeckung 34 zumindest im Wesentlichen quer zur ersten Richtung 50 und/oder zur zweiten Richtung 54 vektoriell aus einer Bewegung in die Einzugsrichtung 88 und einer Bewegung in die zweite Richtung 54 zusammen. Insbesondere ist die Einzugstiefe 92, insbesondere entlang der ersten Richtung 50 oder der zweiten Richtung 54 betrachtet, als eine Differenz eines minimalen Abstands der Abdeckung 34 und des Auszugs 26 in der ersten Abdeckstellung und eines minimalen Abstands der Abdeckung 34 und des Auszugs 26 in der zweiten Abdeckstellung ausgebildet. Insbesondere ist die Einzugstiefe 92 als eine Distanz ausgebildet, über die sich die Abdeckung 34 bei der Bewegung von der ersten Abdeckstellung in die zweite Abdeckstellung in Richtung des Auszugs 26, insbesondere in die Einzugsrichtung 88, und/oder in Richtung der Haupterstreckungsebene der Verstauvorrichtung 14, insbesondere des Gehäuses 22 und/oder des Auszugs 26, bewegt. Bevorzugt ist das zweite Lager 52 derart ausgebildet, dass der erste Teilabschnitt 62 der Bewegungsstrecke 86 bei einer Bewegung von der ersten Abdeckstellung in die zweite Abdeckstellung an einem Anfang der Bewegungsstrecke 86 angeordnet ist und insbesondere zuerst durchlaufen wird. Das zweite Lager 52 ist derart ausgebildet, dass die Abdeckung 34 bei der Bewegung entlang der Bewegungsstrecke 86 von der ersten Abdeckstellung in die zweite Abdeckstellung ausschließlich innerhalb des ersten Teilabschnitts 62 der Bewegungsstrecke 86 der Abdeckung 34 zumindest im Wesentlichen quer zur ersten Richtung 50 und/oder zur zweiten Richtung 54 bewegt wird. Vorzugsweise ist das zweite Lager 52 derart ausgebildet, dass die Abdeckung 34 bei einer Bewegung entlang der Bewegungsstrecke 86 von der ersten Abdeckstellung in die zweite Abdeckstellung nach dem ersten Teilabschnitt 62 lediglich in die zweite Richtung 54 bewegt wird.

Der erste Teilabschnitt 62 der Bewegungsstrecke 86 der Abdeckung 34 beträgt parallel zur ersten Richtung 50 und/oder zur zweiten Richtung 54 höchstens 5 cm, vorzugsweise höchstens 4 cm und bevorzugt höchstens 3 cm. Insbesondere weist der erste Teilabschnitt 62 zumindest im Wesentlichen parallel zur ersten Richtung 50 und/oder zur zweiten Richtung 54 eine maximale Erstreckung 96 auf, die höchstens 5 cm, vorzugsweise höchstens 4 cm und bevorzugt höchstens 3 cm, beträgt. Vorzugsweise ist das zweite Lager 52 dazu vorgesehen, die Abdeckung 34 innerhalb des ersten Teilabschnitts 62 über die vollständige Einzugstiefe 92 zumindest im Wesentlichen quer zur ersten Richtung 50 und/oder zur zweiten Richtung 54 zu bewegen.

Die Aufnahmevorrichtung 30 des Auszugs 26 umfasst eine Vielzahl von Gewindebohrungen 98 zur Aufnahme von Schrauben der Aufnahmevorrichtung 30 (in den Figuren nicht gezeigt), welche insbesondere an dem Auszug 26, insbesondere einem beweglich gelagerten Grundkörper 100 des Auszugs 26, angeordnet sind. Der Auszug 26, insbesondere der Grundkörper 100 des Auszugs 26, begrenzt zumindest eine Ausnehmung 102 zu einer Durchführung von Kabeln des elektrischen Geräts 32 zu einer Anschlussvorrichtung des Gehäuses 22 und/oder des Wohnfahrzeugs 10 (in den Figuren nicht gezeigt). Insbesondere begrenzt der Grundkörper 100 das als Ausnehmung ausgebildete weitere Lagerelement 58. Die Gewindebohrungen 98 sind insbesondere zumindest im Wesentlichen gleichmäßig über eine Aufnahmefläche 104 des Auszugs 26, insbesondere der Aufnahmevorrichtung 30, verteilt angeordnet. Insbesondere ist die Aufnahmefläche 104 dazu vorgesehen, das elektrische Gerät 32 zumindest teilweise flächig aufzunehmen.

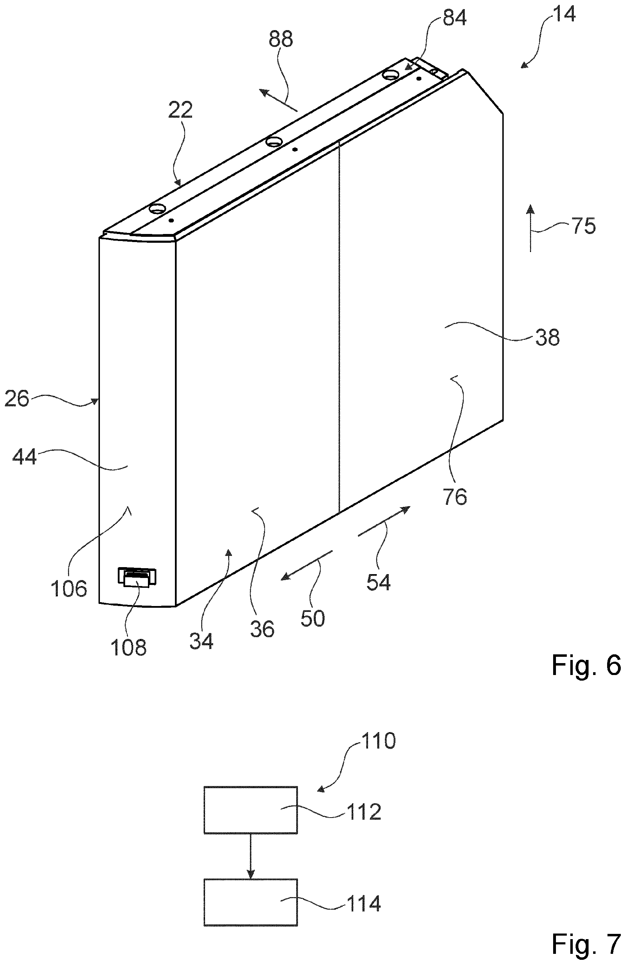

In Figur 6 ist eine perspektivische Ansicht der Verstauvorrichtung 14 gezeigt, wobei der Auszug 26 in der ersten Auszugsstellung und die Abdeckung 34 in der ersten Abdeckstellung angeordnet sind. Das Abdeckelement 44, die Abdeckung 34 und das Außenwandelement 38 bilden, insbesondere in der ersten Auszugsstellung des Auszugs 26 und/oder der ersten Abdeckstellung der Abdeckung 34, eine geschlossene Wandfront aus. Vorzugsweise sind die Außenfläche 36 der Abdeckung 34 und die Außenfläche 76 des Außenwandelements 38, insbesondere in der ersten Auszugsstellung des Auszugs 26 und/oder der ersten Abdeckstellung der Abdeckung 34, zumindest im Wesentlichen bündig zueinander ausgebildet. Vorzugsweise sind eine Außenfläche 106 des Abdeckelements 44 und die Außenfläche 36 der Abdeckung 34, insbesondere in der ersten Auszugsstellung des Auszugs 26 und/oder der ersten Abdeckstellung der Abdeckung 34, zumindest im Wesentlichen bündig zueinander ausgebildet. Vorzugsweise sind die Außenfläche 36 der Abdeckung 34 und die Außenfläche 76 des Außenwandelements 38 und/oder die Außenfläche 106 des Abdeckelements 44 und die Außenfläche 36 der Abdeckung 34, insbesondere in der ersten Auszugsstellung des Auszugs 26 und/oder der ersten Abdeckstellung der Abdeckung 34, jeweils flächenbündig, spaltenfrei und/oder absatzfrei zueinander angeordnet. Der Auszug 26 umfasst ein Griffelement 108, welches an dem Abdeckelement 44 angeordnet ist. Es ist auch denkbar, dass das Abdeckelement 44 und das Griffelement 108 einstückig ausgebildet sind, wobei beispielsweise das Abdeckelement 44 eine Ausnehmung oder einen Fortsatz zu einem Betätigen des Auszugs 26 ausbildet.

In einer alternativen Ausgestaltung der Verstauvorrichtung 14 ist denkbar, dass die Verstauvorrichtung 14 zumindest eine Antriebseinheit (in den Figuren nicht gezeigt), wie beispielsweise einen Elektromotor oder einen anders gearteten Aktuator umfasst, die dazu vorgesehen ist, bei einer Betätigung eine Bewegung des Auszugs 26 von der ersten Auszugsstellung in die zweite Auszugsstellung und/oder von der zweiten Auszugsstellung in die erste Auszugsstellung und/oder eine Bewegung der Abdeckung 34 von der ersten Abdeckstellung in die zweite Abdeckstellung und/oder von der zweiten Abdeckstellung in die erste Abdeckstellung anzutreiben. Bevorzugt umfasst die Verstauvorrichtung 14 zumindest ein Bedienelement zur Betätigung der Antriebseinheit. Vorzugsweise ist das Bedienelement an einer Außenwand der Verstauvorrichtung 14, beispielsweise an dem Abdeckelement 44, angeordnet. Es ist jedoch auch denkbar, dass das Bedienelement beabstandet von dem Gehäuse 22 und/oder einer Außenwand der Verstauvorrichtung 14 angeordnet ist, beispielsweise an einer Innenausbauvorrichtung, insbesondere einem Wandelement o. dgl., des Wohnfahrzeugs 10. Alternativ oder zusätzlich ist denkbar, dass das Bedienelement als Teil einer Steuereinheit des Wohnfahrzeugs 10 ausgebildet ist, wobei insbesondere die Antriebseinheit über die vorrichtungsexterne Steuereinheit betätigbar ist. Beispielsweise ist die Antriebseinheit dazu vorgesehen, zu einem Antreiben des Auszugs 26 und/oder der Abdeckung 34 an dem Koppelelement 68 und/oder zumindest einem der Umlenkelemente 74 anzugreifen und/oder mit dem Koppelelement 68 und/oder zumindest einem der Umlenkelemente 74 zusammenzuwirken.

In Figur 7 ist ein schematischer Verfahrensablauf eines beispielhaften Verfahrens 110 zum Betrieb der Verstauvorrichtung 14 dargestellt. In einem Verfahrensschritt 112 des Verfahrens 110 wird der Auszug 26 über das Griffelement 108 betätigt, insbesondere in die erste Richtung 50 mit einer Betätigungskraft beaufschlagt, wobei der Auszug 26 aus der ersten Auszugsstellung in die erste Richtung 50 bewegt wird. Insbesondere befindet sich der Auszug 26 vor dem Verfahrensschritt 112 in der ersten Auszugsstellung. Bevorzugt befindet sich die Abdeckung 34 vor dem Verfahrensschritt 112 in der ersten Abdeckstellung. Über das Koppelelement 68 wird bei der Bewegung des Auszugs 26 in die erste Richtung 50 die Abdeckung 34 aus der ersten Abdeckstellung in die zweite Richtung 54 bewegt. Besonders bevorzugt schlägt das erste Lager 48, insbesondere das Lagerelement 56 des ersten Lagers 48, bei einem Erreichen der zweiten Auszugsstellung an einem Anschlag des ersten Lagers 48, insbesondere des weiteren Lagerelements 58, an. Vorzugsweise schlagen die weiteren Führungselemente 64 des zweiten Lagers 52 bei einem Erreichen der zweiten Abdeckstellung jeweils an einem Anschlag eines der Führungselemente 60 an. Die Abdeckung 34 wird über das zweite Lager 52, insbesondere die Führungselemente 60, entlang der Bewegungsstrecke 86 bewegt, wobei insbesondere die Abdeckung 34 im ersten Teilabschnitt 62 der Bewegungsstrecke 86 zumindest im Wesentlichen quer zur ersten Richtung 50 und/oder der zweiten Richtung 54 bewegt wird. Bevorzugt wird die Abdeckung 34 entlang der Bewegungsstrecke 86 abschnittsweise zumindest im Wesentlichen geradlinig bewegt. Insbesondere wird die Abdeckung 34 entlang der Bewegungsstrecke 86 an dem Außenwandelement 38 vorbei bewegt und zumindest teilweise, insbesondere zumindest größtenteils, entlang der zweiten Richtung 54 betrachtet neben dem Außenwandelement 38 angeordnet.

In einem weiteren Verfahrensschritt 114 des Verfahrens 110 wird der in der zweiten Auszugsstellung angeordnete Auszug 26 betätigt, insbesondere in die zweite Richtung 54 mit einer Betätigungskraft beaufschlagt, wobei der Auszug 26 aus der zweiten Auszugsstellung in die zweite Richtung 54 bewegt wird. Über das Koppelelement 68 wird bei der Bewegung des Auszugs 26 in die zweite Richtung 54 die Abdeckung 34 aus der zweiten Abdeckstellung in die erste Richtung 50 bewegt. Besonders bevorzugt schlägt das erste Lager 48, insbesondere das Lagerelement 56 des ersten Lagers 48, bei einem Erreichen der ersten Auszugsstellung an einem weiteren Anschlag des ersten Lagers 48, insbesondere des weiteren Lagerelements 58, an. Vorzugsweise schlagen die weiteren Führungselemente 64 des zweiten Lagers 52 bei einem Erreichen der ersten Abdeckstellung jeweils an einem weiteren Anschlag eines der Führungselemente 60 an.

Hinsichtlich weiterer Verfahrensschritte des Verfahrens 110 zu einem Betrieb der Verstauvorrichtung 14 darf auf die vorhergehende Beschreibung der Verstauvorrichtung 14 verwiesen werden, da diese Beschreibung analog auch auf das Verfahren 110 zu lesen ist und somit alle Merkmale der Verstauvorrichtung 14 auch in Bezug auf das Verfahren 110 zu einem Betrieb der Verstauvorrichtung 14 als offenbart gelten.

### Bezugszeichen

- 10: Wohnfahrzeug
- 12: Vorwärtsfahrtrichtung
- 14: Verstauvorrichtung
- 16: Seitenwand
- 18: Eckwand
- 20: Wand
- 22: Gehäuse
- 24: Öffnung
- 26: Auszug
- 28: Öffnung
- 30: Aufnahmevorrichtung
- 32: Elektrisches Gerät
- 34: Abdeckung
- 36: Außenfläche
- 38: Außenwandelement
- 40: Strecke
- 42: Haupterstreckung
- 44: Abdeckelement
- 46: Lagereinheit
- 48: Lager
- 50: Richtung
- 52: Lager
- 54: Richtung
- 56: Lagerelement
- 58: Lagerelement
- 60: Führungselement
- 62: Teilabschnitt
- 64: Führungselement
- 66: Koppeleinheit
- 68: Koppelelement
- 70: Position
- 72: Position
- 74: Umlenkelement
- 76: Außenfläche
- 78: Kante
- 79: Versatzrichtung
- 82: Winkel
- 83: Winkel
- 84: Rahmen
- 85: Befestigungsmittel
- 86: Bewegungsstrecke
- 88: Einzugsrichtung
- 90: Teilabschnitt
- 92: Einzugstiefe
- 94: Dicke
- 96: Erstreckung
- 98: Gewindebohrung
- 100: Grundkörper
- 102: Ausnehmung
- 104: Aufnahmefläche
- 106: Außenfläche
- 108: Griffelement
- 110: Verfahren
- 112: Verfahrensschritt
- 114: Verfahrensschritt

## Patentansprüche

1. Verstauvorrichtung für ein Wohnfahrzeug (10), mit wenigstens einem Gehäuse (22), mit wenigstens einem Auszug (26), welcher in einer ersten Auszugsstellung zumindest teilweise in dem Gehäuse (22) angeordnet ist und welcher in einer zweiten Auszugsstellung zumindest teilweise außerhalb des Gehäuses (22) angeordnet ist, mit wenigstens einer Abdeckung (34), welche in einer ersten Abdeckstellung zumindest teilweise den Auszug (26) bedeckt und welche in einer zweiten Abdeckstellung zumindest teilweise den Auszug (26) freigibt, und mit einer Lagereinheit (46), welche zumindest ein erstes Lager (48) aufweist, welches dazu vorgesehen ist, den Auszug (26) entlang wenigstens einer ersten Richtung (50) von der ersten Auszugsstellung in die zweite Auszugsstellung bewegbar zu lagern, und welche zumindest ein zweites Lager (52) aufweist, welches dazu vorgesehen ist, die Abdeckung (34) abschnittsweise entlang zumindest einer zweiten Richtung (54) von der ersten Abdeckstellung in die zweite Abdeckstellung bewegbar zu lagern, wobei die erste Richtung (50) und die zweite Richtung (54) zumindest im Wesentlichen einander entgegengerichtet sind, **dadurch gekennzeichnet, dass** das zweite Lager (52) dazu vorgesehen ist, die Abdeckung (34) bei einer Bewegung von der ersten Abdeckstellung in die zweite Abdeckstellung und bei einer Bewegung von der zweiten Abdeckstellung in die erste Abdeckstellung zumindest abschnittsweise zumindest im Wesentlichen quer zur ersten Richtung (50) und/oder zur zweiten Richtung (54) zu bewegen.

2. Verstauvorrichtung nach Anspruch 1, **dadurch gekennzeichnet, dass** das zweite Lager (52) zumindest ein Führungselement (60) zu einer Führung der Abdeckung (34) umfasst, welches in zumindest einem Teilabschnitt (62) zumindest im Wesentlichen quer zur ersten Richtung (50) und/oder zur zweiten Richtung (54) ausgebildet ist.

3. Verstauvorrichtung nach Anspruch 1 oder 2, **dadurch gekennzeichnet, dass** das zweite Lager (52) dazu vorgesehen ist, die Abdeckung (34) bei einer Bewegung von der ersten Abdeckstellung in die zweite Abdeckstellung zumindest teilweise in Richtung des Auszugs (26) zu bewegen.

4. Verstauvorrichtung nach Anspruch 2, **dadurch gekennzeichnet, dass** das Führungselement (60) in Teilabschnitten (62, 90) einer Bewegungsstrecke (86) der Abdeckung (34) von der ersten Abdeckstellung in die zweite Abdeckstellung jeweils zumindest im Wesentlichen geradlinig ausgebildet ist, wobei die Teilabschnitte (62, 90) zusammen die zumindest im Wesentlichen vollständige Bewegungsstrecke (86) bilden.

5. Verstauvorrichtung nach einem der vorhergehenden Ansprüche, **dadurch gekennzeichnet, dass** das Gehäuse (22) zumindest ein Außenwandelement (38) umfasst, wobei eine Außenfläche (36) der Abdeckung (34) in der ersten Abdeckstellung zumindest im Wesentlichen bündig zu einer Außenfläche (76) des Außenwandelements (38) angeordnet ist und in der zweiten Abdeckstellung entlang der zweiten Richtung (54) betrachtet neben dem Außenwandelement (38) angeordnet ist.

6. Verstauvorrichtung nach einem der vorhergehenden Ansprüche, **dadurch gekennzeichnet, dass** das zweite Lager (52) derart ausgebildet ist, dass die Abdeckung (34) bei einer Bewegung entlang einer Bewegungsstrecke (86) von der ersten Abdeckstellung in die zweite Abdeckstellung innerhalb eines ersten Teilabschnitts (62) der Bewegungsstrecke (86) der Abdeckung (34) um eine Einzugstiefe (92) von mindestens 1 cm zumindest im Wesentlichen senkrecht zur ersten Richtung (50) und/oder zur zweiten Richtung (54) bewegt wird.

7. Verstauvorrichtung nach einem der vorhergehenden Ansprüche, **dadurch gekennzeichnet, dass** das zweite Lager (52) derart ausgebildet ist, dass die Abdeckung (34) bei einer Bewegung entlang einer Bewegungsstrecke (86) von der ersten Abdeckstellung in die zweite Abdeckstellung ausschließlich innerhalb eines ersten Teilabschnitts (62) der Bewegungsstrecke (86) der Abdeckung (34) zumindest im Wesentlichen quer zur ersten Richtung (50) und/oder zur zweiten Richtung (54) bewegt wird.

8. Verstauvorrichtung nach Anspruch 6 oder 7, **dadurch gekennzeichnet, dass** der erste Teilabschnitt (62) der Bewegungsstrecke (86) der Abdeckung (34) parallel zur ersten Richtung (50) und/oder zur zweiten Richtung (54) höchstens 5 cm beträgt.

9. Verstauvorrichtung nach einem der vorhergehenden Ansprüche, **dadurch gekennzeichnet, dass** der Auszug (26) zumindest ein Abdeckelement (44) umfasst, welches zumindest im Wesentlichen schräg zur ersten Richtung (50) und/oder zur zweiten Richtung (54) angeordnet ist.

10. Verstauvorrichtung nach einem der vorhergehenden Ansprüche, **dadurch gekennzeichnet, dass** der Auszug (26) zu einer Aufnahme zumindest eines elektrischen Geräts (32), insbesondere eines Displays, vorgesehen ist, wobei die Abdeckung (34) dazu vorgesehen ist, bei einer Bewegung von der ersten Abdeckstellung in die zweite Abdeckstellung das elektrische Gerät (32) zumindest größtenteils freizugeben.

11. Wohnfahrzeug mit zumindest einer Verstauvorrichtung (14) nach einem der vorhergehenden Ansprüche.

## Claims

1. Stowage device for a habitation vehicle (10),
with at least one housing (22),
with at least one pull-out element (26) arranged, in a first pull-out position, at least partially within the housing (22) and, in a second pull-out position, at least partially outside the housing (22),
with at least one cover (34) which at least partially covers the pull-out element (26) in a first cover position, and at least partially releases the pull-out element (26) in a second cover position,
and with a bearing unit (46) comprising at least one first bearing (48), which is configured to support the pull-out element (26) movably along at least one first direction (50) from the first pull-out position into the second pull-out position, and comprising at least one second bearing (52), which is configured to support the cover (34) section-wise movably along at least one second direction (54) from the first cover position into the second cover position,
the first direction (50) and the second direction (54) being at least substantially opposed to each other,
**characterised in that** the second bearing (52) is configured, in a movement from the first cover position into the second cover position and in a movement from the second cover position into the first cover position, to move the cover (34) at least section-wise transversally to the first direction (50) and/or to the second direction (54).

2. Stowage device according to claim 1,
**characterised in that** the second bearing (52) comprises at least one guiding element (60) for guiding the cover (34), which is realized in at least one section (62) at least substantially transversally to the first direction (50) and/or to the second direction (54).

3. Stowage device according to claim 1 or 2,
**characterised in that** the second bearing (52) is configured, in a movement from the first cover position into the second cover position, to move the cover (34) at least partially toward the pull-out element (26).

4. Stowage device according to claim 2,
**characterised in that** the guiding element (60) is realized at least substantially straight in respective sections (62, 90) of a movement path (86) of the cover (34) from the first cover position into the second cover position, wherein the sections (62, 90) together form the at least substantially complete movement path (86).

5. Stowage device according to one of the preceding claims,
**characterised in that** the housing (22) comprises at least one outer wall element (38), wherein an outer surface (36) of the cover (34) is in the first cover position arranged at least substantially flush with an outer surface (76) of the outer wall element (38) and is in the second cover position, viewed along the second direction (54), arranged next to the outer wall element (38).

6. Stowage device according to one of the preceding claims,
**characterised in that** the second bearing (52) is realized in such a way that in a movement along a movement path (86) from the first cover position into the second cover position, the cover (34) is moved within a first section (62) of the movement path (86) of the cover (86) by a pull-in depth (92) of at least 1 cm at least substantially perpendicularly to the first direction (50) and/or to the second direction (54).

7. Stowage device according to one of the preceding claims,
**characterised in that** the second bearing (52) is realized in such a way that in a movement along a movement path (86) from the first cover position into the second cover position, the cover (34) is moved exclusively within a first section (62) of the movement path (86) of the cover (34) at least substantially transversally to the first direction (50) and/or to the second direction (54).

8. Stowage device according to claim 6 or 7,
**characterised in that** the first section (62) of the movement path (86) of the cover (34) parallel to the first direction (50) and/or to the second direction (54) amounts to maximally 5 cm.

9. Stowage device according to one of the preceding claims,
**characterised in that** the pull-out element (26) comprises at least one cover element (44), which is arranged at least substantially obliquely to the first direction (50) and/or to the second direction (54).

10. Stowage device according to one of the preceding claims,
**characterised in that** the pull-out element (26) is configured for receiving at last one electrical apparatus (32), in particular a display, wherein the cover (34) is configured to release the electrical apparatus (32) at least to a large extent in a movement from the first cover position into the second cover position.

11. Habitation vehicle with at least one stowage device (14) according to one of the preceding claims.

## Revendications

1. Dispositif de rangement pour un véhicule d'habitation (10),
avec au moins un premier boîtier (22),
avec au moins un élément à déployer (26), qui est dans une première position de déploiement disposé au moins partiellement dans le boîtier (22) et qui est dans une deuxième position de déploiement disposé au moins partiellement hors du boîtier (22),
avec au moins une couverture (34), qui dans une première position de recouvrement (34) couvre l'élément à déployer (26) au moins partiellement et qui dans une deuxième position de recouvrement relâche l'élément à déployer (26) au moins partiellement,
et avec une unité porteuse (46) comprenant au moins un premier palier (48) qui est prévu pour supporter l'élément à déployer (26) de telle manière qu'il soit mouvable le long d'au moins une première direction (50) de la première position de déploiement dans la deuxième position de déploiement,
l'unité porteuse (46) aussi comprenant au moins un deuxième palier (52) qui est prévu pour supporter la couverture (34) de telle manière qu'elle soit mouvable par sections le long au moins une deuxième direction (54) de la première position de recouvrement dans la deuxième position de recouvrement,
la première direction (50) et la deuxième direction (54) étant au moins sensiblement opposées l'une à l'autre,
**caractérisé en ce que** le deuxième palier (52) est prévu - en cours d'un mouvement de la première position de recouvrement dans la deuxième position de recouvrement et en cours d'un mouvement de la deuxième position de recouvrement dans la première position de recouvrement - pour mouvoir la couverture (34) au moins par sections au moins sensiblement en travers de la première direction (50) et/ou de la deuxième direction (54).

2. Dispositif de rangement selon la revendication 1,
**caractérisé en ce que** le deuxième palier (52) comporte au moins un élément de guidage (60) pour guider la couverture (34), ledit deuxième palier (52) étant dans au moins une section (62) réalisé au moins sensiblement en travers de la première direction (50) et/ou de la deuxième direction (54).

3. Dispositif de rangement selon la revendication 1 ou 2,
**caractérisé en ce que** le deuxième palier (52) est prévu, en cours d'un mouvement de la première position de recouvrement dans la deuxième position de recouvrement, pour mouvoir la couverture (34) au moins partiellement vers l'élément à déployer (26).

4. Dispositif de rangement selon la revendication 2,
**caractérisé en ce qu'en** sections (62, 90) d'un trajet de mouvement (86) de la couverture (34) de la première position de recouvrement dans la deuxième position de recouvrement, l'élément de guidage (60) est respectivement formé au moins sensiblement en ligne droite, les sections (62, 90) ensemble formant le trajet de mouvement (86) au moins sensiblement complet.

5. Dispositif de rangement selon l'une des revendications précédentes,
**caractérisé en ce que** le boîtier (22) comporte au moins un élément de paroi extérieure (38),
où une surface extérieure (36) de la couverture (34) est dans la première position de recouvrement agencée au moins sensiblement en affleurissant avec une surface (76) de l'élément de paroi extérieure (38) et est dans la deuxième position de recouvrement, vue le long de la deuxième direction (54), agencée à côté de l'élément de paroi extérieure (38).

6. Dispositif de rangement selon l'une des revendications précédentes,
**caractérisé en ce que** le deuxième palier (52) est réalisé de telle manière qu'en cours d'un mouvement le long d'un trajet de mouvement (86) de la première position de recouvrement à la deuxième position de recouvrement, la couverture (34) est mue dans une première section (62) du trajet de mouvement (86) de la couverture (34) par une profondeur de rentrage (92) d'au moins 1 cm au moins sensiblement perpendiculairement à la première direction (50) et/ou à la deuxième direction (54).

7. Dispositif de rangement selon l'une des revendications précédentes,
**caractérisé en ce que** le deuxième palier (52) est réalisé de telle manière qu', en cours d'un mouvement le long d'un trajet de mouvement (86) de la première position de recouvrement dans la deuxième position de recouvrement, la couverture (34) est mue exclusivement dans une première section (62) du trajet de mouvement (86) de la couverture (34) au moins sensiblement en travers de la première direction (50) et/ou de la deuxième direction (54).

8. Dispositif de rangement selon la revendication 6 ou 7,
**caractérisé en ce que** la première section (62) du trajet de mouvement (86) de la couverture (34) est de maximalement 5 cm en parallèle à la première direction (50) et/ou à la deuxième direction (54).

9. Dispositif de rangement selon l'une des revendications précédentes,
**caractérisé en ce que** l'élément à déployer (26) comporte au moins un élément de couverture (44) agencé de façon au moins sensiblement oblique par rapport à la première direction (50) et/ou à la deuxième direction (54).

10. Dispositif de rangement selon l'une des revendications précédentes,
**caractérisé en ce que** l'élément à déployer (26) est prévu pour recevoir au moins un appareil électrique (32), en particulier un affichage,
où la couverture (34) est prévue pour relâcher l'appareil électrique (32) au moins en grande partie dans un mouvement de la première position de recouvrement à la deuxième position de mouvement.

11. Véhicule d'habitation
avec au moins un dispositif de rangement (14) selon l'une quelconque des revendications précédentes.
